(19) Europäisches Patentamt / European Patent Office / Office européen des brevets

(11) **EP 4 266 596 A1**

(12) **EUROPEAN PATENT APPLICATION**

(43) Date of publication:
25.10.2023 Bulletin 2023/43

(51) International Patent Classification (IPC):
*H04B 7/155* (2006.01)

(21) Application number: 23150277.4

(22) Date of filing: 04.01.2023

(52) Cooperative Patent Classification (CPC):
H04B 7/15528

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.04.2022 US 202217727074

(71) Applicant: Sharp Kabushiki Kaisha
Sakai-shi
Osaka 590-8522 (JP)
(72) Inventors:
• Yin, Zhanping
Vancouver, 98683 (US)
• Yoshimura, Tomoki
Camas, 98607 (US)

(74) Representative: Müller Hoffmann & Partner
Patentanwälte mbB
St.-Martin-Strasse 58
81541 München (DE)

(54) **PROCEDURES OF SYNCHRONIZATION SIGNAL GENERATION AND TRANSMISSION FOR NETWORK CONTROLLED REPEATERS (NCR)**

(57) A network controlled repeater (NCR) is described. The NCR may include receiving circuitry configured to obtain master information block (MIB) or system information block (SIB) information to be broadcast in a local synchronization signal block (SSB) and physical broadcast channel (PBCH). The NCR may also include transmitting circuitry configured to determine a local NCR SSB burst set and beam configuration based on higher layer signaling, regenerate the SSB and PBCH with the obtained information, and transmit the SSB following the local NCR SSB burst set and beam configuration.

Beam signaled received at Smart Repeater from gNB
The Smart Repeater receives system info based on the best beam

**FIG. 9**

## Description

### TECHNICAL FIELD

The present disclosure relates generally to communication systems. More specifically, the present disclosure relates to procedures of synchronization signal generation and transmission for network controlled repeaters (NCR).

### BACKGROUND

Wireless communication devices have become smaller and more powerful in order to meet consumer needs and to improve portability and convenience. Consumers have become dependent upon wireless communication devices and have come to expect reliable service, expanded areas of coverage and increased functionality. A wireless communication system may provide communication for a number of wireless communication devices, each of which may be serviced by a base station. A base station may be a device that communicates with wireless communication devices.

As wireless communication devices have advanced, improvements in communication capacity, speed, flexibility and/or efficiency have been sought. However, improving communication capacity, speed, flexibility and/or efficiency may present certain problems.

For example, wireless communication devices may communicate with one or more devices using a communication structure. However, the communication structure used may only offer limited flexibility and/or efficiency. As illustrated by this discussion, systems and methods that improve communication flexibility and/or efficiency may be beneficial.

### BRIEF DESCRIPTION OF THE DRAWINGS

Figure 1 is a block diagram illustrating one implementation of one or more g Node Bs (gNBs) and one or more user equipment (UEs) in which systems and methods for signaling may be implemented;
Figure 2 shows examples of multiple numerologies;
Figure 3 is a diagram illustrating one example of a resource grid and resource block;
Figure 4 shows examples of resource regions;
Figure 5 is a block diagram illustrating one implementation of a network controller repeater (NCR);
Figure 6 is a diagram illustrating one example of a synchronization signal block;
Figure 7 is a diagram illustrating one example of an SSB (Synchronization Signal Block) burst and an SSB set configuration;
Figure 8 is a diagram illustrating one example of beam sweeping with an SSB burst;
Figure 9 is a diagram illustrating one example SSB detection at an NCR and SSB regeneration;
Figure 10 is a sequence diagram illustrating one example of a procedure of SSB generation and transmission for an NCR;
Figure 11 is a flow diagram illustrating one example of a method for the NCR behavior associated with the sequence diagram of Figure 10;
Figure 12 is a sequence diagram illustrating another example of a procedure of SSB generation and transmission for an NCR;
Figure 13 illustrates various components that may be utilized in a UE;
Figure 14 illustrates various components that may be utilized in a gNB;
Figure 15 illustrates various components that may be utilized in an NCR;
Figure 16 is a block diagram illustrating one implementation of a UE in which one or more of the systems and/or methods described herein may be implemented;
Figure 17 is a block diagram illustrating one implementation of a gNB in which one or more of the systems and/or methods described herein may be implemented;
Figure 18 is a block diagram illustrating one implementation of an NCR in which one or more of the systems and/or methods described herein may be implemented;
Figure 19 is a block diagram illustrating one implementation of a gNB; and
Figure 20 is a block diagram illustrating one implementation of a UE.

### DETAILED DESCRIPTION

A network controlled repeater (NCR) is described. The NCR may include receiving circuitry configured to obtain master information block (MIB) or system information block (SIB) information to be broadcast in a local synchronization signal block (SSB) and physical broadcast channel (PBCH). The NCR may also include transmitting circuitry configured to determine a local NCR SSB burst set and beam configuration based on higher layer signaling, regenerate the SSB and PBCH with the obtained information, and transmit the SSB following the local NCR SSB burst set and beam configuration.

The receiving circuitry may be further configured to obtain the MIB and/or SIB information by detecting the SSB and PBCH from a base station. In some examples, the receiving circuitry may be configured to obtain the MIB and/or SIB information by receiving dedicated MIB and/or SIB information from higher layer signaling from a base station.

In some examples, SSB and PBCH information may be the same as detected SSB and PBCH information transmitted by a base station. Furthermore, the SSB and PBCH information may include NCR specific parameters not provided by a base station.

The transmitting circuitry may be further configured to report NCR beamforming capability or an NCR antenna configuration to a base station. The receiving circuitry may also be further configured to obtain an NCR synchronization signal configuration from the base station to determine a number of SSBs in a burst and beams associated with SSB transmissions.

In one aspect, the NCR may determine an NCR synchronization signal configuration and report the NCR synchronization signal configuration to a base station.

In a yet further example, the receiving circuitry may be further configured to receive a reconfiguration for the SSB burst and beam configuration via higher layer signaling from a base station.

A communication method of a network controlled repeater (NCR) is also described. The method includes obtaining master information block (MIB) or system information block (SIB) information to be broadcast in a local synchronization signal block (SSB) and physical broadcast channel (PBCH). The method also determines a local NCR SSB burst set and beam configuration based on higher layer signaling and regenerates the SSB and PBCH with the obtained information. The method also includes transmitting the SSB following the local NCR SSB burst set and beam configuration.

The 3rd Generation Partnership Project, also referred to as "3GPP," is a collaboration agreement that aims to define globally applicable technical specifications and technical reports for third and fourth generation wireless communication systems. The 3GPP may define specifications for next generation mobile networks, systems and devices.

3GPP Long Term Evolution (LTE) is the name given to a project to improve the Universal Mobile Telecommunications System (UMTS) mobile phone or device standard to cope with future requirements. In one aspect, UMTS has been modified to provide support and specification for the Evolved Universal Terrestrial Radio Access (E-UTRA) and Evolved Universal Terrestrial Radio Access Network (E-UTRAN).

At least some aspects of the systems and methods disclosed herein may be described in relation to the 3GPP LTE, LTE-Advanced (LTE-A), LTE-Advanced Pro and other standards (e.g., 3GPP Releases 8, 9, 10, 11, 12, 13, 14, 15, 16, 17, and/or 18). However, the scope of the present disclosure should not be limited in this regard. At least some aspects of the systems and methods disclosed herein may be utilized in other types of wireless communication systems.

A wireless communication device may be an electronic device used to communicate voice and/or data to a base station, which in turn may communicate with a network of devices (e.g., public switched telephone network (PSTN), the Internet, etc.). In describing systems and methods herein, a wireless communication device may alternatively be referred to as a mobile station, a UE, an access terminal, a subscriber station, a mobile terminal, a remote station, a user terminal, a terminal, a subscriber unit, a mobile device, etc. Examples of wireless communication devices include cellular phones, smart phones, personal digital assistants (PDAs), laptop computers, netbooks, e-readers, wireless modems, etc. In 3GPP specifications, a wireless communication device is typically referred to as a UE. However, as the scope of the present disclosure should not be limited to the 3GPP standards, the terms "UE" and "wireless communication device" may be used interchangeably herein to mean the more general term "wireless communication device." A UE may also be more generally referred to as a terminal device.

In 3GPP specifications, a base station is typically referred to as a Node B, an evolved Node B (eNB), a home enhanced or evolved Node B (HeNB), a g Node B (gNB) or some other similar terminology. As the scope of the disclosure should not be limited to 3GPP standards, the terms "base station," "Node B," "eNB," "gNB" and "HeNB" may be used interchangeably herein to mean the more general term "base station." Furthermore, the term "base station" may be used to denote an access point. An access point may be an electronic device that provides access to a network (e.g., Local Area Network (LAN), the Internet, etc.) for wireless communication devices. The term "communication device" may be used to denote both a wireless communication device and/or a base station. An gNB may also be more generally referred to as a base station device.

It should be noted that as used herein, a "cell" may be any communication channel that is specified by standardization or regulatory bodies to be used for International Mobile Telecommunications-Advanced (IMT-Advanced) or IMT-2020, and all of it or a subset of it may be adopted by 3GPP as licensed bands or unlicensed bands (e.g., frequency bands) to be used for communication between an eNB or gNB and a UE. It should also be noted that in E-UTRA and E-UTRAN overall description, as used herein, a "cell" may be defined as "combination of downlink and optionally uplink resources." The linking between the carrier frequency of the downlink resources and the carrier frequency of the uplink resources may be indicated in the system information transmitted on the downlink resources.

The 5th generation communication systems, dubbed NR (New Radio technologies) by 3GPP, envision the use of time/frequency/space resources to allow for services, such as eMBB (enhanced Mobile Broad-Band) transmission, URLLC (Ultra Reliable and Low Latency Communication) transmission, and mMTC (massive Machine Type Communication) transmission. And, in NR, transmissions for different services may be specified (e.g., configured) for one or more bandwidth parts (BWPs) in a serving cell and/or for one or more serving cells. A user equipment (UE) may receive a downlink signal(s) and/or transmit an uplink signal(s) in the BWP(s) of the serving cell and/or the serving cell(s).

In order for the services to use the time, frequency, and/or spatial resources efficiently, it would be useful to be able to efficiently control downlink and/or uplink transmissions. Therefore, a procedure for efficient control of downlink and/or uplink transmissions should be designed. Accordingly, a detailed design of a procedure for downlink and/or uplink transmissions may be beneficial.

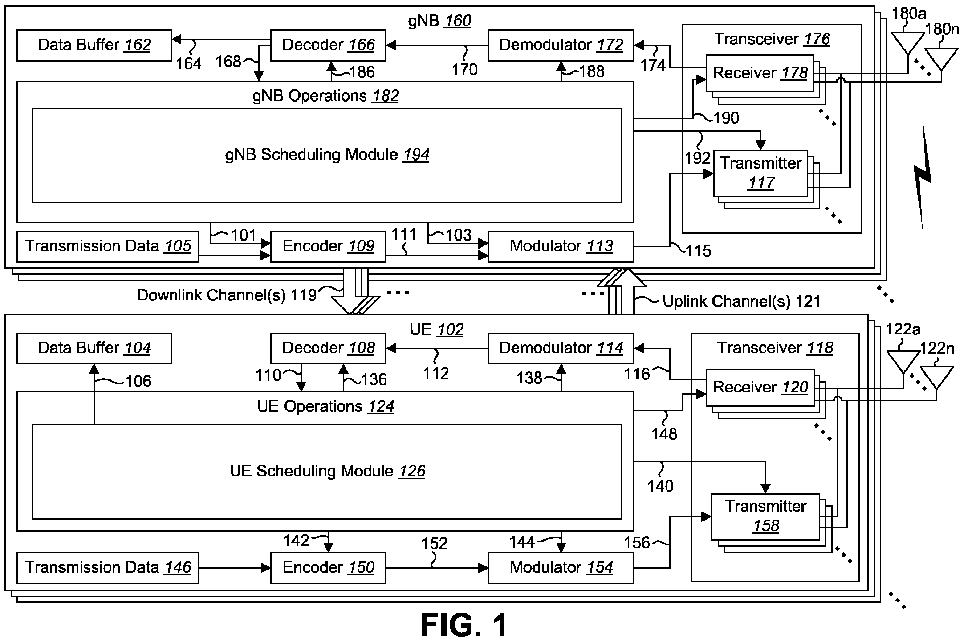

Figure 1 is a block diagram illustrating one implementation of one or more gNBs 160 and one or more UEs 102 in which systems and methods for signaling may be implemented. The one or more UEs 102 communicate with one or more gNBs 160 using one or more physical antennas 122a-n. For example, a UE 102 transmits electromagnetic signals to the gNB 160 and receives electromagnetic signals from the gNB 160 using the one or more physical antennas 122a-n. The gNB 160 communicates with the UE 102 using one or more physical antennas 180a-n. In some implementations, the term "base station," "eNB," and/or "gNB" may refer to and/or may be replaced by the term "Transmission Reception Point (TRP)." For example, the gNB 160 described in connection with Figure 1 may be a TRP in some implementations.

The UE 102 and the gNB 160 may use one or more channels and/or one or more signals 119, 121 to communicate with each other. For example, the UE 102 may transmit information or data to the gNB 160 using one or more uplink channels 121. Examples of uplink channels 121 include a physical shared channel (e.g., PUSCH (physical uplink shared channel)) and/or a physical control channel (e.g., PUCCH (physical uplink control channel)), etc. The one or more gNBs 160 may also transmit information or data to the one or more UEs 102 using one or more downlink channels 119, for instance. Examples of downlink channels 119 include a physical shared channel (e.g., PDSCH (physical downlink shared channel) and/or a physical control channel (PDCCH (physical downlink control channel)), etc. Other kinds of channels and/or signals may be used.

Each of the one or more UEs 102 may include one or more transceivers 118, one or more demodulators 114, one or more decoders 108, one or more encoders 150, one or more modulators 154, a data buffer 104 and a UE operations module 124. For example, one or more reception and/or transmission paths may be implemented in the UE 102. For convenience, only a single transceiver 118, decoder 108, demodulator 114, encoder 150 and modulator 154 are illustrated in the UE 102, though multiple parallel elements (e.g., transceivers 118, decoders 108, demodulators 114, encoders 150 and modulators 154) may be implemented.

The transceiver 118 may include one or more receivers 120 and one or more transmitters 158. The one or more receivers 120 may receive signals from the gNB 160 using one or more antennas 122a-n. For example, the receiver 120 may receive and downconvert signals to produce one or more received signals 116. The one or more received signals 116 may be provided to a demodulator 114. The one or more transmitters 158 may transmit signals to the gNB 160 using one or more physical antennas 122a-n. For example, the one or more transmitters 158 may upconvert and transmit one or more modulated signals 156.

The demodulator 114 may demodulate the one or more received signals 116 to produce one or more demodulated signals 112. The one or more demodulated signals 112 may be provided to the decoder 108. The UE 102 may use the decoder 108 to decode signals. The decoder 108 may produce decoded signals 110, which may include a UE-decoded signal 106 (also referred to as a first UE-decoded signal 106). For example, the first UE-decoded signal 106 may comprise received payload data, which may be stored in a data buffer 104. Another signal included in the decoded signals 110 (also referred to as a second UE-decoded signal 110) may comprise overhead data and/or control data. For example, the second UE decoded signal 110 may provide data that may be used by the UE operations module 124 to perform one or more operations.

In general, the UE operations module 124 may enable the UE 102 to communicate with the one or more gNBs 160. The UE operations module 124 may include one or more of a UE scheduling module 126.

The UE scheduling module 126 may perform downlink reception(s) and uplink transmission(s). The downlink reception(s) include reception of data, reception of downlink control information, and/or reception of downlink reference signals. Also, the uplink transmissions include transmission of data, transmission of uplink control information, and/or transmission of uplink reference signals.

Also, in a carrier aggregation (CA), the gNB 160 and the UE 102 may communicate with each other using a set of serving cells. Here a set of serving cells may include one primary cell and one or more secondary cells. For example, the gNB 160 may transmit, by using the RRC message, information used for configuring one or more secondary cells to form together with the primary cell a set of serving cells. Namely, the set of serving cells may include one primary cell and one or more secondary cells. Here, the primary cell may be always activated. Also, the gNB 160 may activate zero or more secondary cell within the configured secondary cells. Here, in the downlink, a carrier corresponding to the primary cell may be the downlink primary component carrier (i.e., the DL PCC), and a carrier corresponding to a secondary cell may be the downlink secondary component carrier (i.e., the DL SCC). Also, in the uplink, a carrier corresponding to the primary cell may be the uplink primary component carrier (i.e., the UL PCC), and a carrier corresponding to the secondary cell may be the uplink secondary component carrier (i.e., the UL SCC).

Also, in a single cell operation, the gNB 160 and the UE 102 may communicate with each other using one serving cell. Here, the serving cell may be a primary cell.

In a radio communication system, physical channels (uplink physical channels and/or downlink physical channels) may be defined. The physical channels (uplink physical channels and/or downlink physical channels) may be used for transmitting information that is delivered from a higher layer and/or information that is generated from a physical layer.

## PRACH

For example, in uplink, a PRACH (Physical Random Access Channel) may be defined. In some approaches, the PRACH (e.g., as part of a random access procedure) may be used for an initial access connection establishment procedure, a handover procedure, a connection re-establishment, a timing adjustment (e.g., a synchronization for an uplink transmission, for UL synchronization) and/or for requesting an uplink shared channel (UL-SCH) resource (e.g., the uplink physical shared channel (PSCH) (e.g., PUSCH) resource).

## PUCCH

In another example, a physical uplink control channel (PUCCH) may be defined. The PUCCH may be used for transmitting uplink control information (UCI). The UCI may include hybrid automatic repeat request-acknowledgement (HARQ-ACK), channel state information (CSI) and/or a scheduling request (SR). The HARQ-ACK is used for indicating a positive acknowledgement (ACK) or a negative acknowledgment (NACK) for downlink data (e.g., Transport block(s), Medium Access Control Protocol Data Unit (MAC PDU) and/or Downlink Shared Channel (DL-SCH)). The CSI is used for indicating state of downlink channel (e.g., a downlink signal(s)). Also, the SR is used for requesting resources of uplink data (e.g., Transport block(s), MAC PDU and/or Uplink Shared Channel (UL-SCH)).

Here, the DL-SCH and/or the UL-SCH may be a transport channel that is used in the MAC layer. Also, a transport block(s) (TB(s)) and/or a MAC PDU may be defined as a unit(s) of the transport channel used in the MAC layer. The transport block may be defined as a unit of data delivered from the MAC layer to the physical layer. The MAC layer may deliver the transport block to the physical layer (e.g., the MAC layer delivers the data as the transport block to the physical layer). In the physical layer, the transport block may be mapped to one or more codewords.

## PDCCH

In downlink, a physical downlink control channel (PDCCH) may be defined. The PDCCH may be used for transmitting downlink control information (DCI). Here, more than one DCI formats may be defined for DCI transmission on the PDCCH. Namely, fields may be defined in the DCI format(s), and the fields are mapped to the information bits (e.g., DCI bits).

## PDSCH and PUSCH

A physical downlink shared channel (PDSCH) and a physical uplink shared channel (PUSCH) may be defined. For example, in a case that the PDSCH (e.g., the PDSCH resource) is scheduled by using the DCI format(s) for the downlink, the UE 102 may receive the downlink data, on the scheduled PDSCH (e.g., the PDSCH resource). Alternatively, in a case that the PUSCH (e.g., the PUSCH resource) is scheduled by using the DCI format(s) for the uplink, the UE 102 transmits the uplink data, on the scheduled PUSCH (e.g., the PUSCH resource). For example, the PDSCH may be used to transmit the downlink data (e.g., DL-SCH(s), a downlink transport block(s)). Additionally or alternatively, the PUSCH may be used to transmit the uplink data (e.g., UL-SCH(s), an uplink transport block(s)).

Furthermore, the PDSCH and/or the PUSCH may be used to transmit information of a higher layer (e.g., a radio resource control (RRC)) layer), and/or a MAC layer). For example, the PDSCH (e.g., from the gNB 160 to the UE 102) and/or the PUSCH (e.g., from the UE 102 to the gNB 160) may be used to transmit a RRC message (a RRC signal). Additionally or alternatively, the PDSCH (e.g., from the gNB 160 to the UE 102) and/or the PUSCH (e.g., from the UE 102 to the gNB 160) may be used to transmit a MAC control element (a MAC CE). Here, the RRC message and/or the MAC CE are also referred to as a higher layer signal.

## SS/PBCH block

In some approaches, a physical broadcast channel (PBCH) may be defined. For example, the PBCH may be used for broadcasting the MIB (master information block). Here, system information may be divided into the MIB and a number of SIB(s) (system information block(s)). For example, the MIB may be used for carrying minimum system information. Additionally or alternatively, the SIB(s) may be used for carrying system information messages.

In some approaches, in downlink, synchronization signals (SSs) may be defined. The SS may be used for acquiring time and/or frequency synchronization with a cell. Additionally or alternatively, the SS may be used for detecting a physical layer cell ID of the cell. SSs may include a primary SS and a secondary SS.

An SS/PBCH block may be defined as a set of a primary SS (PSS), a secondary SS (SSS) and a PBCH. In the time domain, the SS/PBCH block consists of 4 OFDM symbols, numbered in terms of OFDM symbols in increasing order from 0 to 3 within the SS/PBCH block, where PSS, SSS, and PBCH with associated demodulation reference signal (DMRS) are mapped to symbols. One or more SS/PBCH blocks may be mapped within a certain time duration (e.g. 5 msec).

Additionally, the SS/PBCH block may be used for beam measurement, radio resource management (RRM) measurement and radio link monitoring (RLM) measurement. Specifically, the secondary synchronization signal (SSS) may be used for the measurement.

In the radio communication for uplink, UL RS(s) may be used as uplink physical signal(s). Additionally or alternatively, in the radio communication for downlink, DL RS(s) may be used as downlink physical signal(s). The uplink physical signal(s) and/or the downlink physical signal(s) may not be used to transmit information that is provided from the higher layer where the information is used by a physical layer.

Here, the downlink physical channel(s) and/or the downlink physical signal(s) described herein may be assumed to be included in a downlink signal (e.g., a DL signal(s)) in some implementations for the sake of simple descriptions. Additionally or alternatively, the uplink physical channel(s) and/or the uplink physical signal(s) described herein may be assumed to be included in an uplink signal (i.e. an UL signal(s)) in some implementations for the sake of simple descriptions.

**Numerology and slot configuration**

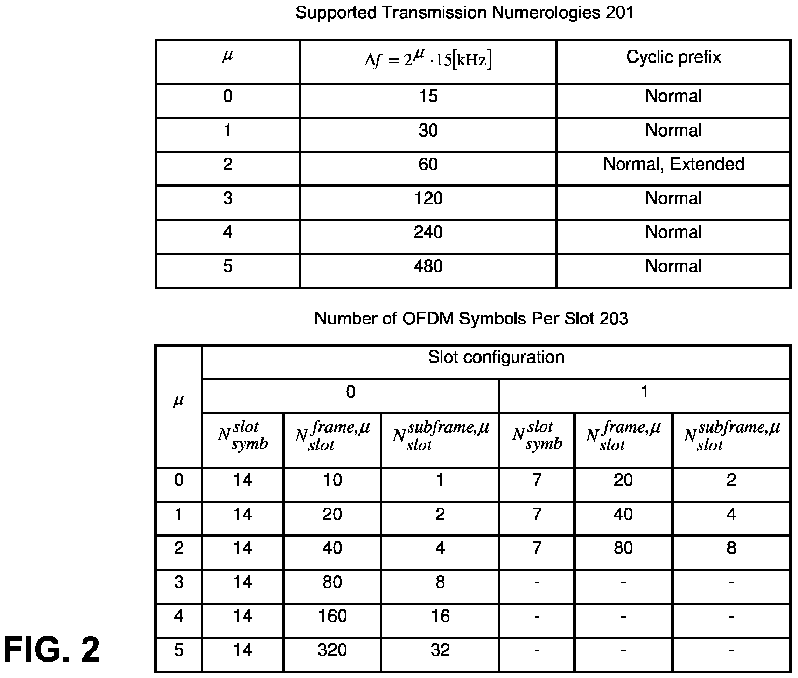

Figure 2 shows examples of multiple numerologies 201. As shown in Figure 2, multiple numerologies 201 (e.g., multiple subcarrier spacing) may be supported. For example, $\mu$ (e.g., a subcarrier space configuration) and a cyclic prefix (e.g., the $\mu$ and the cyclic prefix for a BWP) may be configured by higher layer parameters (e.g., a RRC message) for the downlink and/or the uplink. Here, 15 kHz may be a reference numerology 201. For example, an RE of the reference numerology 201 may be defined with a subcarrier spacing of 15 kHz in a frequency domain and 2048Ts + CP length (e.g., 160Ts or 144Ts) in a time domain, where Ts denotes a baseband sampling time unit defined as 1/(15000*2048) seconds.

Further, time unit $T_c$ may be used for expression of the length of the time domain. For the time unit $T_c$, $T_c$ = $1/(\Delta f_{max} \cdot N_f)$ where $\Delta f_{max}$ = 480 kHz and $N_f$ = 4096. For a constant $\kappa$, $\kappa = \Delta f_{max} \cdot N_f/(\Delta f_{ref} N_{f, ref})$ = 64. $\Delta f_{ref}$ is 15 kHz. $N_{f, ref}$ is 2048.

Transmission of a signal in the downlink and/or transmission of a signal in the uplink may be organized into a radio frame having the length Tf. Tf = $(\Delta f_{max} N_f/100) \cdot T_s$ = 10 ms. Here, "·" represents multiplication. The radio frame includes 10 subframes. For the length $T_{sf}$ of the subframe, $T_{sf}$ = $(\Delta f_{max} N_f/1000) \cdot T_s$ = 1 ms. For the number of OFDM symbols per subframe, $N^{subframe,\mu}_{symb}$ = $N^{slot}_{symb} N^{subframe, \mu}_{slot}$.

Additionally or alternatively, a number of OFDM

$$N^{slot}_{symb}$$

symbol(s) 203 per slot ( $N^{slot}_{symb}$ ) may be determined based on the $\mu$ (e.g., the subcarrier space configuration).

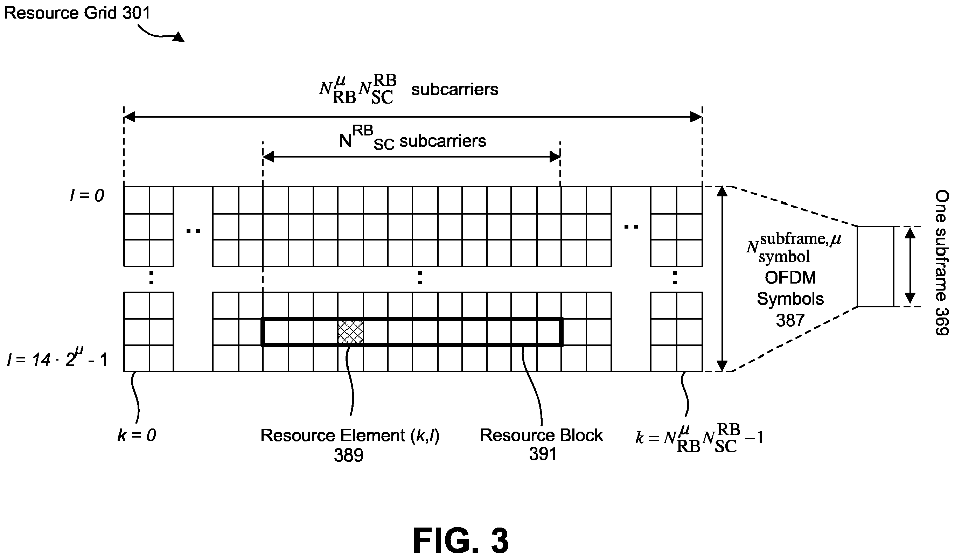

Figure 3 is a diagram illustrating one example of a resource grid 301 and resource block 391 (e.g., for the downlink and/or the uplink). The resource grid 301 and resource block 391 illustrated in Figure 3 may be utilized in some implementations of the systems and methods disclosed herein. In another example, the resource block 391 may include $N^{RB}_{sc}$ continuous subcarriers. In another example, the resource block 391 may consists of $N^{RB}_{sc}$ continuous subcarriers.

In Figure 3, one subframe 369 may include

$$N^{subframe,\mu}_{symbol}$$

symbols 387. Additionally or alternatively, a resource block 391 may include a number of resource elements (RE) 389. Here, in the downlink, the OFDM access scheme with cyclic prefix (CP) may be employed, which may be also referred to as CP-OFDM. A downlink radio frame may include multiple pairs of downlink resource blocks (RBs) 391 which is also referred to as physical resource blocks (PRBs). The downlink RB pair is a unit for assigning downlink radio resources, defined by a predetermined bandwidth (RB bandwidth) and a time slot. The downlink RB pair may include two downlink RBs 391 that are continuous in the time domain. Additionally or alternatively, the downlink RB 391 may include twelve sub-carriers in frequency domain and seven (for normal CP) or six (for extended CP) OFDM symbols in time domain. A region defined by one sub-carrier in frequency domain and one OFDM symbol in time domain is referred to as a resource element (RE) 389 and is uniquely identified by the index pair (k,l), where k and l are indices in the frequency and time domains, respectively.

Additionally or alternatively, in the uplink, in addition to CP-OFDM, a Single-Carrier Frequency Division Multiple Access (SC-FDMA) access scheme may be employed, which is also referred to as Discrete Fourier Transform-Spreading OFDM (DFT-S-OFDM). An uplink radio frame may include multiple pairs of uplink resource blocks 391. The uplink RB pair is a unit for assigning uplink radio resources, defined by a predetermined bandwidth (RB bandwidth) and a time slot. The uplink RB pair may include two uplink RBs 391 that are continuous in the time domain. The uplink RB may include twelve sub-carriers in frequency domain and seven (for normal CP) or six (for extended CP) OFDM/DFT-S-OFDM symbols in time domain. A region defined by one sub-carrier in the frequency domain and one OFDM/DFT-S-OFDM symbol in the time domain is referred to as a resource element (RE) 389 and is uniquely identified by the index pair (k,l) in a slot, where k and l are indices in the frequency and time domains respectively.

Each element in the resource grid 301 on antenna port p and the subcarrier configuration $\mu$ is called a resource element 389 and is uniquely identified by the

$$k = 0, ..., N^{\mu}_{RB} N^{RB}_{SC} - 1$$

index pair (k,l) where $k = 0, ..., N^{\mu}_{RB} N^{RB}_{SC} - 1$ is the index in the frequency domain and l refers to the symbol position in the time domain. The resource element $(k,l)$ 389 on the antenna port $p$ and the subcarrier spacing configuration $\mu$ is denoted $(k,l)_{p,\mu}$. The physical

resource block 391 is defined as $N_{SC}^{RB} = 12$ consecutive subcarriers in the frequency domain. The physical resource blocks 391 are numbered from 0 to $N_{RB}^{\mu} - 1$ in the frequency domain. The relation between the physical resource block number $^{n}PRB$ in the frequency domain and the resource element $(k,l)$ is given by

$$^{n}PRB = \left\lfloor \frac{k}{N_{SC}^{RB}} \right\rfloor .$$

## Reference Signal

In the NR, the following reference signals may be defined

NZP CSI-RS (non-zero power channel state information reference signal)
ZP CSI-RS (Zero-power channel state information reference signal)
DMRS (demodulation reference signal)
SRS (sounding reference signal)

NZP CSI-RS may be used for channel tracking (e.g. synchronization), measurement to obtain CSI (CSI measurement including channel measurement and interference measurement), measurement to obtain the beam forming performance. NZP CSI-RS may be transmitted in the downlink (gNB to UE). NZP CSI-RS may be transmitted in an aperiodic or semi-persistent or periodic manner. Additionally, the NZP CSI-RS can be used for radio resource management (RRM) measurement and radio link control (RLM) measurement.
ZP CSI-RS may be used for interference measurement and transmitted in the downlink (gNB to UE). ZP CSI-RS may be transmitted in an aperiodic or semi-persistent or periodic manner.
DMRS may be used for demodulation for the downlink (gNB to UE), the uplink (UE to gNB), and the sidelink (UE to UE).
SRS may be used for channel sounding and beam management. The SRS may be transmitted in the uplink (UE to gNB).

## DCI format

In some approaches, the DCI may be used. The following DCI formats may be defined

DCI format 0_0
DCI format 0_1
DCI format 0_2
DCI format 1_0
DCI format 1_1
DCI format 1_2
DCI format 2_0
DCI format 2_1
DCI format 2_2
DCI format 2_3
DCI format 2_4
DCI format 2_5
DCI format 2_6
DCI format 3_0
DCI format 3_1

DCI format 0_0 may be used for the scheduling of PUSCH in one cell. The DCI may be transmitted by means of the DCI format 0_0 with cyclic redundancy check (CRC) scrambled by Cell Radio Network Temporary Identifiers (C-RNTI) or Configured Scheduling RNTI (CS-RNTI) or Modulation and Coding Scheme - Cell RNTI (MCS-C-RNTI) or temporally cell RNTI (TC-RNTI).
DCI format 0_1 may be used for the scheduling of one or multiple PUSCH in one cell, or indicating configured grant downlink feedback information (CG-DFI) to a UE. The DCI may be transmitted by means of the DCI format 0_1 with CRC scrambled by C-RNTI or CS-RNTI or semi-persistent channel state information (SP-CSI-RNTI) or MCS-C-RNTI. The DCI format 0_2 may be used for CSI request (e.g. aperiodic CSI reporting or semi-persistent CSI request). The DCI format 0_2 may be used for SRS request (e.g. aperiodic SRS transmission).
DCI format 0_2 may be used for the scheduling of PUSCH in one cell. The DCI may be transmitted by means of the DCI format 0_2 with CRC scrambled by C-RNTI or CS-RNTI or SP-CSI-RNTI or MCS-C-RNTI. The DCI format 0_2 may be used for scheduling of PUSCH with high priority and/or low latency (e.g. URLLC). The DCI format 0_2 may be used for CSI request (e.g. aperiodic CSI reporting or semi-persistent CSI request). The DCI format 0_2 may be used for SRS request (e.g. aperiodic SRS transmission).
Additionally, for example, the DCI included in the DCI format 0_Y (Y = 0, 1, 2, ...) may be a BWP indicator (e.g., for the PUSCH). Additionally or alternatively, the DCI included in the DCI format 0_Y may be a frequency domain resource assignment (e.g., for the PUSCH). Additionally or alternatively, the DCI included in the DCI format 0_Y may be a time domain resource assignment (e.g., for the PUSCH). Additionally or alternatively, the DCI included in the DCI format 0_Y may be a modulation and coding scheme (e.g., for the PUSCH). Additionally or alternatively, the DCI included in the DCI format 0_Y may be a new data indicator. Additionally or alternatively, the DCI included in the DCI format 0_Y may be a TPC command for scheduled PUSCH. Additionally or alternatively, the DCI included in the DCI format 0_Y may be a CSI request that is used for requesting the CSI reporting. Additionally or alternatively, as described below, the DCI included in the DCI format 0_Y may be information used for indicating an index of a configuration of a configured grant. Additionally or alternatively, the DCI included in the DCI format 0_Y may be the priority indication (e.g., for the PUSCH transmission and/or for the PUSCH reception).

DCI format 1_0 may be used for the scheduling of PDSCH in one DL cell. The DCI is transmitted by means of the DCI format 1_0 with CRC scrambled by C-RNTI or CS-RNTI or MCS-C-RNTI. The DCI format 1_0 may be used for random access procedure initiated by a PDCCH order. Additionally or alternately, the DCI may be transmitted by means of the DCI format 1_0 with CRC scrambled by system information RNTI (SI-RNTI), and the DCI may be used for system information transmission and/or reception. Additionally or alternately, the DCI may be transmitted by means of the DCI format 1_0 with CRC scrambled by random access RNTI (RA-RNTI) for random access response (RAR) (e.g. Msg 2) or msgB-RNTI for 2-step RACH. Additionally or alternately, the DCI may be transmitted by means of the DCI format 1_0 with CRC scrambled by temporally cell RNTI (TC-RNTI), and the DCI may be used for msg3 transmission by a UE 102.

DCI format 1_1 may be used for the scheduling of PDSCH in one cell. The DCI may be transmitted by means of the DCI format 1_1 with CRC scrambled by C-RNTI or CS-RNTI or MCS-C-RNTI. The DCI format 1_1 may be used for SRS request (e.g. aperiodic SRS transmission).

DCI format 1_2 may be used for the scheduling of PDSCH in one cell. The DCI may be transmitted by means of the DCI format 1_2 with CRC scrambled by C-RNTI or CS-RNTI or SP-CSI-RNTI or MCS-C-RNTI. The DCI format 1_2 may be used for scheduling of PDSCH with high priority and/or low latency (e.g. URLLC). The DCI format 1_2 may be used for SRS request (e.g. aperiodic SRS transmission).

Additionally, for example, the DCI included in the DCI format 1_X may be a BWP indicator (e.g., for the PDSCH). Additionally or alternatively, the DCI included in the DCI format 1_X may be frequency domain resource assignment (e.g., for the PDSCH). Additionally or alternatively, the DCI included in the DCI format 1_X may be a time domain resource assignment (e.g., for the PDSCH). Additionally or alternatively, the DCI included in the DCI format 1_X may be a modulation and coding scheme (e.g., for the PDSCH). Additionally or alternatively, the DCI included in the DCI format 1_X may be a new data indicator. Additionally or alternatively, the DCI included in the DCI format 1_X may be a TPC command for scheduled PUCCH. Additionally or alternatively, the DCI included in the DCI format 1_X may be a CSI request that is used for requesting (e.g., triggering) transmission of the CSI (e.g., CSI reporting (e.g., aperiodic CSI reporting)). Additionally or alternatively, the DCI included in the DCI format 1_X may be a PUCCH resource indicator. Additionally or alternatively, the DCI included in the DCI format 1_X may be a PDSCH-to-HARQ feedback timing indicator. Additionally or alternatively, the DCI included in the DCI format 1_X may be the priority indication (e.g., for the PDSCH transmission and/or the PDSCH reception). Additionally or alternatively, the DCI included in the DCI format 1_X may be the priority indication (e.g., for the HARQ-ACK transmission for the PDSCH and/or the HARQ-ACK reception for the PDSCH).

DCI format 2_0 may be used for notifying the slot format, channel occupancy time (COT) duration for unlicensed band operation, available resource block (RB) set, and search space group switching. The DCI may transmitted by means of the DCI format 2_0 with CRC scrambled by slot format indicator RNTI (SFI-RNTI).

DCI format 2_1 may used for notifying the physical resource block(s) (PRB(s)) and orthogonal frequency division multiplexing (OFDM) symbol(s) where UE may assume no transmission is intended for the UE. The DCI is transmitted by means of the DCI format 2_1 with CRC scrambled by interrupted transmission RNTI (INT-RNTI).

DCI format 2_2 may used for the transmission of transmission power control (TPC) commands for PUCCH and PUSCH. The following information is transmitted by means of the DCI format 2_2 with CRC scrambled by TPC-PUSCH-RNTI or TPC-PUCCH-RNTI. In a case that the CRC is scrambled by TPC-PUSCH-RNTI, the indicated one or more TPC commands may applied to the TPC loop for PUSCHs. In a case that the CRC is scrambled by TPC-PUCCH-RNTI, the indicated one or more TPC commands may be applied to the TPC loop for PUCCHs.

DCI format 2_3 may be used for the transmission of a group of TPC commands for SRS transmissions by one or more UEs. Along with a TPC command, a SRS request may also be transmitted. The DCI may be is transmitted by means of the DCI format 2_3 with CRC scrambled by TPC-SRS-RNTI.

DCI format 2_4 may used for notifying the PRB(s) and OFDM symbol(s) where UE cancels the corresponding UL transmission. The DCI may be transmitted by means of the DCI format 2_4 with CRC scrambled by cancellation indication RNTI (CI-RNTI).

DCI format 2_5 may used for notifying the availability of soft resources for integrated access and backhaul (IAB) operation. The DCI may be transmitted by means of the DCI format 2_5 with CRC scrambled by availability indication RNTI (AI-RNTI).

DCI format 2_6 may used for notifying the power saving information outside discontinuous reception (DRX) Active Time for one or more UEs. The DCI may transmitted by means of the DCI format 2_6 with CRC scrambled by power saving RNTI (PS-RNTI).

DCI format 3_0 may used for scheduling of NR physical sidelink control channel (PSCCH) and NR physical sidelink shared channel (PSSCH) in one cell. The DCI may be transmitted by means of the DCI format 3_0 with CRC scrambled by sidelink RNTI (SL-RNTI) or sidelink configured scheduling RNTI (SL-CS-RNTI). This may be used for vehicular to everything (V2X) operation for NR V2X UE(s).

DCI format 3_1 may be used for scheduling of LTE PSCCH and LTE PSSCH in one cell. The following information is transmitted by means of the DCI format 3_1 with CRC scrambled by SL-L-CS-RNTI. This may be used for LTE V2X operation for LTE V2X UE(s).

## Search space

The UE 102 may monitor one or more DCI formats on common search space set (CSS) and/or UE-specific search space set (USS). A set of PDCCH candidates for a UE to monitor may be defined in terms of PDCCH search space sets. A search space set can be a CSS set or a USS set. A UE 102 monitors PDCCH candidates in one or more of the following search spaces sets. The search space may be defined by a PDCCH configuration in a RRC layer.

- a Type0-PDCCH CSS set configured by pdcch-ConfigSIB 1 in MIB or by searchSpaceSIB1 in PDCCH-ConfigCommon or by searchSpaceZero in PDCCH-ConfigCommon for a DCI format with CRC scrambled by a SI-RNTI on the primary cell of the MCG
- a Type0A-PDCCH CSS set configured by searchSpaceOtherSystemInformation in PDCCH-ConfigCommon for a DCI format with CRC scrambled by a SI-RNTI on the primary cell of the MCG
- a Type1-PDCCH CSS set configured by ra-SearchSpace in PDCCH-ConfigCommon for a DCI format with CRC scrambled by a RA-RNTI or a TC-RNTI on the primary cell
- a Type2-PDCCH CSS set configured by paging Search Space in PDCCH-ConfigCommon for a DCI format with CRC scrambled by a P-RNTI on the primary cell of the MCG
- a Type3-PDCCH CSS set configured by SearchSpace in PDCCH-Config with searchSpaceType = common for DCI formats with CRC scrambled by INT-RNTI, SFI-RNTI, TPC-PUSCH-RNTI, TPC-PUCCH-RNTI, TPC-SRS-RNTI, CI-RNTI, or PS-RNTI and, only for the primary cell, C-RNTI, MCS-C-RNTI, or CS-RNTI(s), and
- a USS set configured by SearchSpace in PDCCH-Config with searchSpaceType = ue-Specific for DCI formats with CRC scrambled by C-RNTI, MCS-C-RNTI, SP-CSI-RNTI, CS-RNTI(s), SL-RNTI, SL-CS-RNTI, or SL-L-CS-RNTI.

The UE 102 may monitor a set of candidates of the PDCCH in one or more control resource sets (e.g., CORESETs) on the active DL bandwidth part (BWP) on each activated serving cell according to corresponding search space sets. The CORESETs may be configured from gNB 160 to a UE 102, and the CSS set(s) and the USS set(s) are defined in the configured CORESET. One or more CORESET may be configured in a RRC layer.

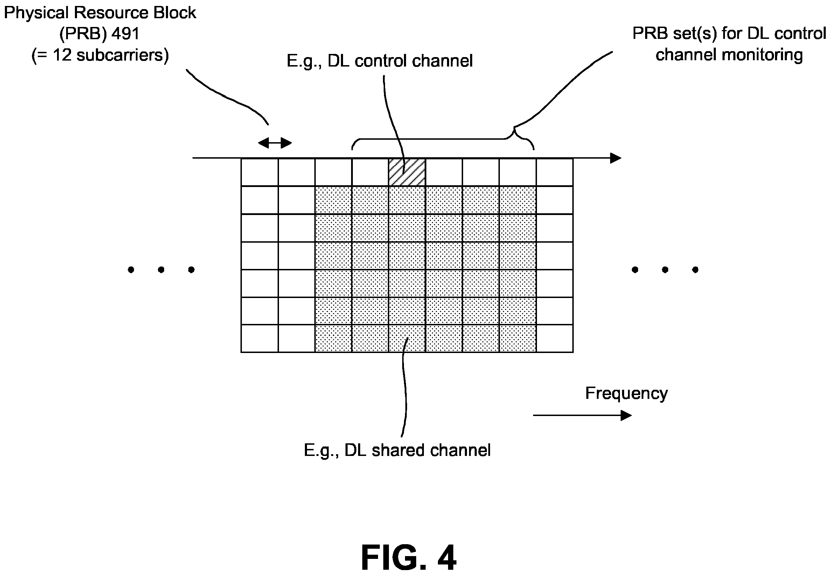

Figure 4 shows examples of resource regions (e.g., resource region of the downlink). One or more sets 401 of PRB(s) 491 (e.g., a control resource set (e.g., CORESET)) may be configured for DL control channel monitoring (e.g., the PDCCH monitoring). For example, the CORESET is, in the frequency domain and/or the time domain, a set 401 of PRBs 491 within which the UE 102 attempts to decode the DCI (e.g., the DCI format(s), the PDCCH(s)), where the PRBs 491 may or may not be frequency contiguous and/or time contiguous, a UE 102 may be configured with one or more control resource sets (e.g., the CORESETs) and one DCI message may be mapped within one control resource set. In the frequency-domain, a PRB 491 is the resource unit size (which may or may not include DM-RS) for the DL control channel.

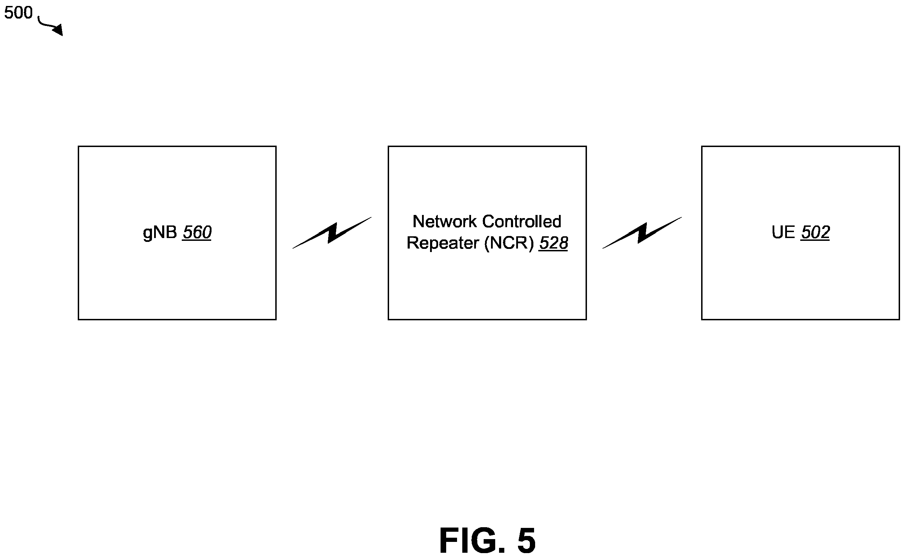

Figure 5 is a block diagram illustrating one implementation 500 of a network controller repeater (NCR) 528. A network controlled repeater (NCR) 528, or a smart repeater can enhance the physical signaling forwarding with proper beams based on the locations of the gNB 560 and the connected UEs 502.

Due to different locations and directions from the gNB 560 to the NCR 528, and the NCR 528 to a connected UE 502, the beams between the gNB 560 and NCR 528 can be very different from the beams from NCR 528 to a UE 502. Therefore, how to configure the synchronization signals for proper beam management should be decided first.

Currently, a physical layer relay performs amplify-and-forward on received signals without knowing the target destinations and the contents of the signals. Thus, it cannot perform beam-based transmissions to the target UE 502. On the other hand, an Integrated Access and Backhaul (IAB) node works as an gNB 560 to UE 502 and as a UE 502 to gNB 560. So, the data is decoded and rescheduled and forwarded from one side to the other side.

An NCR 528 based transmission with beamforming cannot be achieved by some systems.

An NCR node can perform separate beam management for the link between the gNB 560 and NCR 528, and the link between the NCR 528 and UE 502. To perform beam management between NCR 528 and UEs 502, the NCR 528 should regenerate and transmit synchronization signals based on the received synchronization information from gNB 560.

For the link between NCR 528 and gNB 560, the gNB 560 configures SSBs with beam sweeping, the NCR 528 may determine the best beam between the NCR 528 and gNB 560 with existing beam management methods.

The NCR 528 may then detect the SSBs and PBCHs, and regenerate the SSBs and PBCHs with the detected information. The NCR 528 then transmits the synchronization signals with sperate beams and SSB burst structures based on some higher layer configurations.

The NCR 528 should decode and regenerate the SSBs with different beams in different SSB instances in a SSB burst. The SSB and PBCH information can be the same as detected in the SSBs and PBCHs transmitted by the gNB 560. Additionally or alternatively, the SSBs and PBCHs can include extra NCR specific parameters besides the information from the gNB 560, or with information provided by gNBs via higher layer signaling.

For the SSB burst and beam configuration, the NCR 528 may obtain configurations from gNB 560 to decide the number of SSBs in a burst and the beams associated with the SSB transmissions. Alternatively, the NCR 528 may decide the number of SSBs in a burst and the beams associated with the SSB transmissions locally, and report the configurations to gNB 560 automatically or upon request.

Coverage is a fundamental aspect of cellular network deployments. Mobile operators rely on different types of network nodes to offer blanket coverage in their deployments. Deployment of regular full-stack cells is one option but it may not be always possible (e.g., no availability of backhaul) or economically viable.

As a result, new types of network nodes have been considered to increase mobile operators' flexibility for their network deployments. For example, Integrated Access and Backhaul (IAB) was introduced in Rel-16 and enhanced in Rel-17 as a new type of network node not requiring a wired backhaul. Another type of network node is the RF repeater which simply amplify-and-forward any signal that they receive. RF repeaters have seen a wide range of deployments in 2G, 3G and 4G to supplement the coverage provided by regular full-stack cells. In Rel-17, RAN4 specified RF and EMC requirements for such RF repeaters for NR targeting both FR1 and FR2.

While an RF repeater presents a cost effective means of extending network coverage, it has its limitations. An RF repeater simply does an amplify-and-forward operation without being able to take into account various factors that could improve performance. Such factors may include information on semi-static and/or dynamic downlink/uplink configuration, adaptive transmitter/receiver spatial beamforming, ON-OFF status, etc.

A network-controlled repeater (NCR) is an enhancement over conventional RF repeaters with the capability to receive and process side control information from the network. Side control information could allow a network-controlled repeater to perform its amplify-and-forward operation in a more efficient manner. Potential benefits could include mitigation of unnecessary noise amplification, transmissions and receptions with better spatial directivity, and simplified network integration.

The study on NR network-controlled repeaters may consider the following scenarios and assumptions:

- Network-controlled repeaters are inband RF repeaters used for extension of network coverage on FR1 and FR2 bands, while during the study FR2 deployments may be prioritized.

- For only single hop stationary network-controlled repeaters
- Network-controlled repeaters are transparent to UEs
- Network-controlled repeater can maintain the gNB-repeater link and repeater-UE link simultaneously

Cost efficiency may be a consideration point for network-controlled repeaters (NCRs).

Some side control information below may be considered relating to network-controlled repeaters including assumption of max transmission power:

- Beamforming information
- Timing information to align transmission / reception boundaries of network-controlled repeater
- Information on UL-DL TDD configuration
- ON-OFF information for efficient interference management and improved energy efficiency
- Power control information for efficient interference management (as the 2nd priority)

Further consideration may be given to L1/L2 signaling (including its configuration) to carry the side control information.

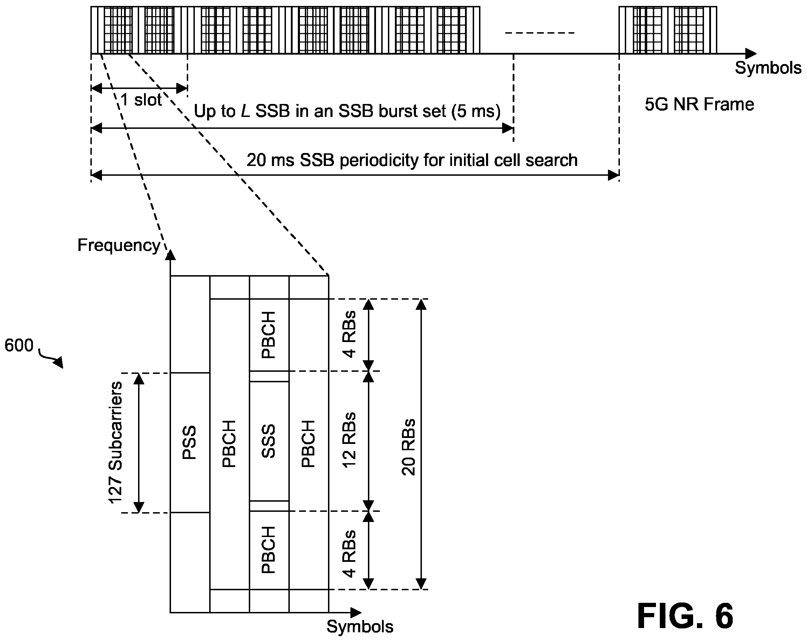

Figure 6 demonstrates a synchronization signal block (SSB) 600 in NR. Synchronization signal block (SSB) refers to Synchronization/PBCH block because synchronization signal and PBCH channel are packed as a single block that moves together. The components of this block include:

- Synchronization Signal: PSS (Primary Synchronization Signal), SSS (Secondary Synchronization Signal)
- PBCH: PBCH DMRS and PBCH (Data)

5G NR resource grid consists of subcarriers in frequency domain and symbols in time domain. Resource grid is combination of resource blocks (RBs). One RB (resource Block) consists of 12 consecutive subcarriers in frequency domain. There two frequency bands supported in 5G NR technology, i.e. FR1 (Sub-6 GHz) and FR2 (millimeter wave). There are various subcarrier spacing supported in 5G NR with 15 KHz, 30 KHz, 60 KHz, 120 KHz and 240 KHz. SSB utilizes subcarrier spacing of 15 or 30 KHz in FR1 and 120 or 240 KHz in FR2. Figure 6 is a diagram illustrating one example of a synchronization signal block.

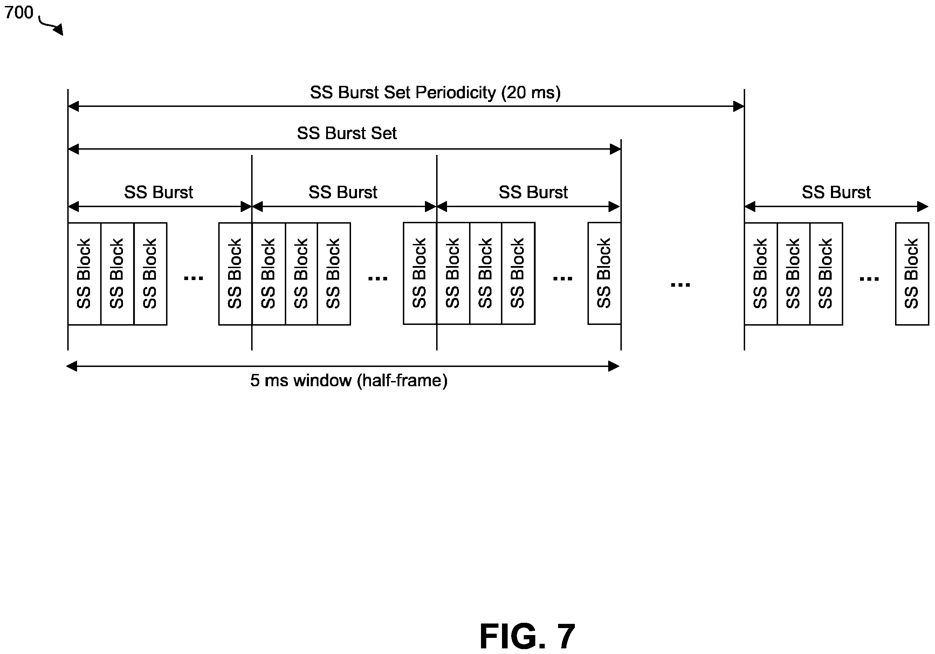

Figure 7 is a diagram 700 illustrating one example of an SSB (Synchronization Signal Block) burst and an SSB set configuration.

SS Block : { 1 symbol PSS, 1 symbol SSS, 2 symbols PBCH }
SS Burst: One or multiple SS Block(s)
SS Burst Set : One or multiple SS burst(s), Transmission periodic (default: 20 ms), Confined in 5ms window

As shown, SSB is mapped to 4 OFDM symbols in the time domain versus 20 resource blocks (RBs), i.e., 240 subcarriers in the frequency domain. Beam sweeping concept is employed in 5G NR for SSB transmission. Multiple SSBs are transmitted periodically at about 20 ms intervals. About 64 SSBs are transmitted in different beams within SS burst set period. SS blocks transmission within single SS burst set is limited to about 5ms window. Frequency location of SSB is configured by upper layer stack to support sparser search raster in order to detect SSB.

Following are the possible candidate SSB locations (L) within SS Burst Set. Each slot in time domain consists of 2 SS block locations for < 6 GHz for 15 KHz/30 KHz. Each slot consists of 2 SS blocks in 120 KHz for > 6 GHz.

How many different beams are being transmitted is determined by how many SSBs are being transmitted within a SSB Burst Set (a set of SSBs being transmitted in 5 ms window of SSB transmission). The Lmax is the parameter defining the maximum number of SSBs that can be transmitted within a SSB set. In sub 6 GHz, up to 3 GHz, then Lmax is, or from 3 GHz up to 6 GHz, then Lmax is 8 And in millimeter wave (mmWave) from 6 GHz to 52.6 GHz, then Lmax is 64. In other words, in sub 6 GHz, a maximum of 4 or 8 different beams can be used and they sweep in one dimension (horizontal only or vertical only). in mmWave, a maximum of 64 different beams can be used and they can sweep in two dimensions (horizontal and vertical directions). Note the actual number of SSBs L within SS Burst Set is configured by gNB and the value of L is smaller or equal to Lmax.

The candidate SS/PBCH blocks in a half frame (e.g, 5ms window in Figure 7) are indexed in an ascending order in time from 0 to L-1.

A UE determines the 2 LSB bits, for L = 4, or the 3 LSB bits, for L > 4 , of a SS/PBCH block index per half frame from a one-to-one mapping with an index of the DM-RS sequence transmitted in the PBCH. For L = 64, the UE determines the 3 MSB bits of the SS/PBCH block index per half frame by PBCH payload bits. Thus, each SS Block within a SS Block Set (i.e., all of the SS Blocks within the 5 ms period of the SSB transmission) is assigned with a unique number starting from 0 and increasing by 1 from 0 to L-1. This unique number resets to 0 in the next SS Block Set (i.e., next 5 ms span after SSB transmission cycle (e.g., 20 ms). This unique number (i.e., SSBlock Index) is informed to UE via two different parts within SSBlock.

- One part is carried by PBCH DMRS (i.e., SSB parameter)
- Another part is carried by PBCH Payload.

Both SS and PBCH detection helps UE synchronize with the gNB (i.e., 5G base station) during initial network entry phase. 5G NR SS consists of PSS (Primary SS) and SSS (Secondary SS). A BPSK modulated m-sequence of length 127 is used for NR PSS whereas BPSK modulated Gold sequence of length 127 is used for NR SSS. Both PSS and SSS combination help to identify about 1008 physical cell identities. By detecting and decoding SS, UE can obtain physical cell identity, achieve downlink synchronization in time/frequency domain and acquire time instants of PBCH channel. Center frequency of PSS/SSS is aligned with center frequency of PBCH. PBCH carries very basic 5G NR system information for UEs. Any 5G NR compatible UE must have to decode information on PBCH in order to access the 5G cell.

Information carried by PBCH include following, downlink system bandwidth, timing information in radio frame, SS burst set periodicity, system frame number, other upper layer information.

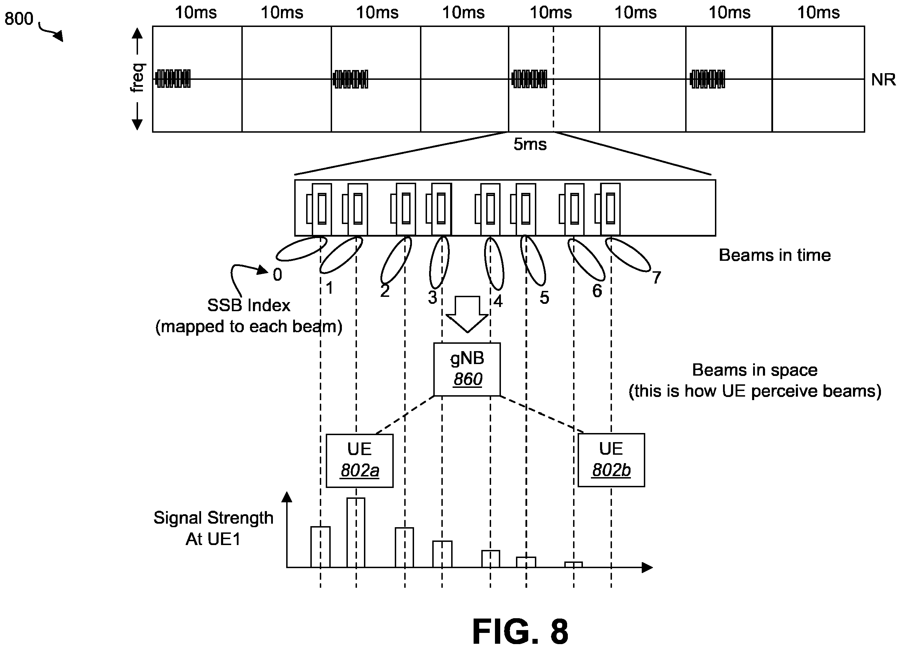

Figure 8 is a diagram 800 illustrating one example of beam sweeping with an SSB burst. Beam sweeping is implemented by changing beam direction for each SSB transmission. For the mechanism by which UE measures and identifies the best beam for a UE, as shown in Figure 8. The best beam to the UE (802a, 802b) is the beam with the best signal quality, e.g. with the best Received Signal Strength Indicator (RSSI) and/or Reference Signal Received Powe (RSRP) and/or Reference Signal Received Quality (RSRQ).

(1) Multiple SSBs are being transmitted with a certain interval.
(2) Each SSB can be identified by a unique number called SSB index.
(3) Each SSB is transmitted via a specific beam radiated in a certain direction.
(4) UE measures the signal strength of each SSB it detected for a certain period (a period of one SSB Set).
(5) From the measurement result, UE can identify the SSB index with the strongest signal strength. This SSB with the strongest signal strength is the best beam for the UE.

In order to support beamforming, the synchronization signals with beam sweeping should be configured first. The scope of this invention involves the configuration and transmission of synchronization signals from NCR, and the side information required to support the configuration by the gNB 860 from the backhaul link.

Currently, there is no ability to do beamforming and spatial multiplexing on a amplify-and-forward repeater. On the other hand, an IAB node is treated as an gNB from the UE's perspective, and independent scheduling and beamforming are performed on the IAB to UE link.

A smart repeater (SR) or NCR, as 3GPP defines it, would not provide separate routing, but would be a single hop link. However, transparency of UE's links (802a, 802b) relayed to a gNB 860 needs to be maintained. To allow beamforming, some enhancements should be considered at NCR beyond the simple amplify-and-forward repeater.

The relevant use case for this and the benefit for all NCRs first and foremost is to be able to beamform or use MIMO, which is useful for exploiting the high capability for millimeter wave (mmWave) spectrum to carry large amounts of data to a given unit area. Since millimeter wave spectrum prefers not to propagate through walls, NCRs can be used to bring milli-meter wave spectrum from the inside to the outside and vice versa.

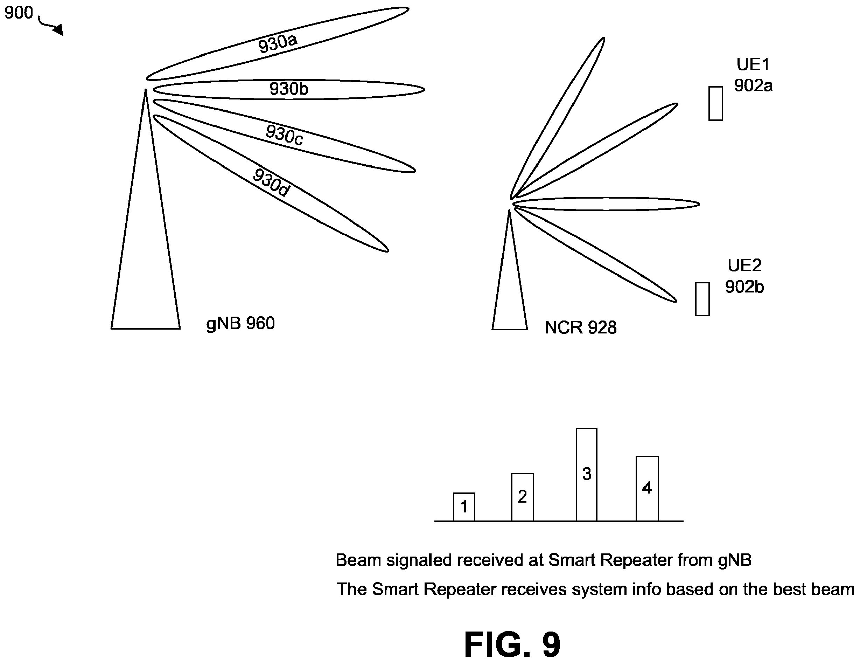

Figure 9 is a diagram 900 illustrating one example SSB detection at an NCR and SSB regeneration. The network-controlled repeater 928 or the smart repeater should forward the serving cell configurations to UEs (902a, 902b) connected via the smart repeater.

For beam management, the gNB 960 transmits a sequence of SSB beams 930a-d with different directions in a SSB burst set, and the smart repeater (NCR 928) detects the best beam in the burst set to receive and decode the system information in PBCH.

The NCR 928 cannot simply forward the received SSBs (930a-d) to UEs (902a-902b) at least for the following reasons.

First, as illustrated, the NCR 928 received the SSB burst 930 from gNB 960, and detects the best beam with the best received signal quality, shown as beam 930c in Figure 9. The other beams (930a, 930b, 930d) are weak because the beam directions are not aligned with the NCR 928. To forward SSBs (930a-d) and the system information, e.g., in the PBCH, the NCR 928 should not forward the SSBs (930a-d) received on other SSB indexes since the signal strength is already weak.

Even for the SSB with the best beam, since there is a SSB index associated with the each SSB and PBCH transmission, forwarding the SSB with the given index in SSB burst at different SSB index will cause wrong DMRS position and information RE mappings for the PBCH. With mis-matched indexes, the UE (902a or 902b) will not be able to decode the information from the PBCH.

Secondly, the beams between the gNB 960 and NCR 928 can be very different from the beam between the NCR 928 and the UE (902a or 902b). The beam from the gNB 960 to NCR 928 is the same to all UEs connected to the NCR 928, but the beams between the NCR 928 to different UEs can be different, as shown in Figure 9 with different beams for UE1 902a and UE2 902b.

Thirdly, the NCR 928 may have different antenna panel configurations from the gNB 960. In general, the gNB 960 may have a much larger antenna array with a larger number of antennas than the NCR 928. Thus, the beams generated from the antenna array can also be different based on the antenna array configuration, e.g., the supported number of beams, and the analog beamforming functions.

Therefore, forwarding the SSBs (930a-d) from gNB 960 is not useful and not possible. The NCR 928 should regenerate the SSBs (930a-d) with its local beams with the system information obtained from the gNB 960 based on the received system information in the SSB and PBCH in the best beam from the gNB 960. Then the NCR 928 transmits the synchronization signals with PSS/SSS/PBCH with its local SSB bursts (930a-d) with local beam configurations.

## Procedures of SSB generation and transmission for NCR

Several methods can be considered for the procedures of SSB generation and transmission for NCR.

## Method 1: NCR synchronization signals are configured by gNB based on reported NCR capabilities.

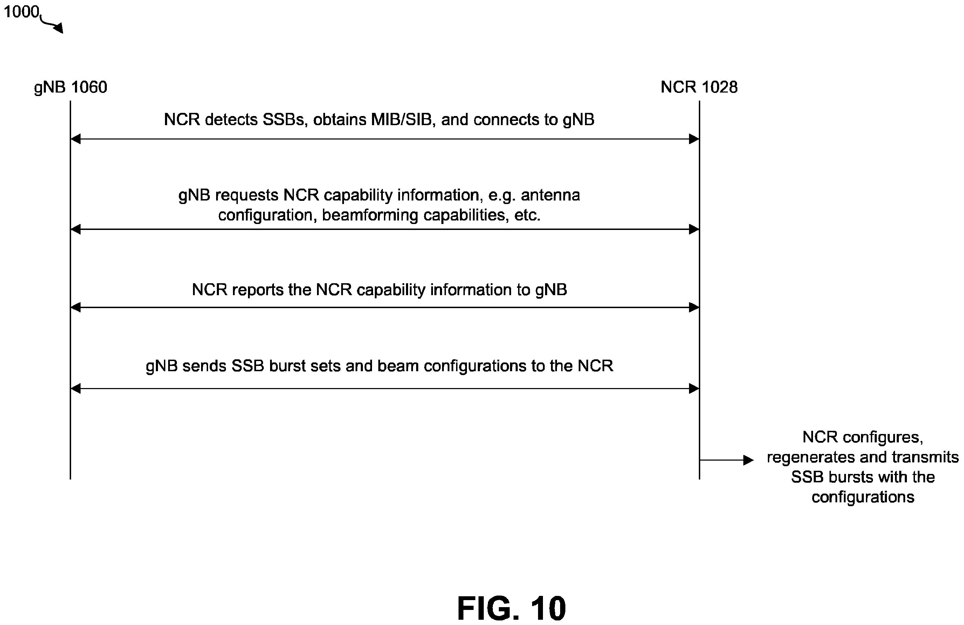

Figure 10 is a sequence diagram 1000 illustrating one example of a procedure of SSB generation and transmission for NCR 1028. In one method, the NCR SSBs are configured by the gNB 1060 with side information by higher layer signaling, e.g., RRC configuration.

In order to configure the SSBs correctly, the gNB 1060 needs to obtain some NCR capability information, e.g., the NCR antenna configuration (or the number of SSBs the NCR 1028 can transmit within the SSB burst set), allowed beam configuration and beam refinement capabilities, etc. Then the gNB 1060 configures the SSBs, beam refinement procedures based on the NCR 1028 capabilities via higher layer signaling. This method may include the following steps:

Step 1: NCR 1028 detects SSBs from gNB 1060, and obtains MIB and SIB from the gNB 1060, and connects to the gNB 1060 through RACH procedure. Step 2: gNB 1060requests the NCR 1028 to report its capabilities, which includes but not limited to the antenna array configuration, maximum number of beams or the number of SSBs the NCR 1028 can transmit within the SSB burst set, etc. Step 2 is optional in case of NCR 1028 can report its capability without a request.

Step 3: NCR 1028 reports its capability to gNB 1060. Additionally, or alternatively, the NCR 1028 may report its capability to gNB 1060 even without a request from gNB 1060 in Step 2.

Step 4: gNB 1060 provides the SSBs and beam configurations for the NCR 1028 by higher layer signaling, i.e., RRC signaling, to the NCR 1028. The beam configurations may indicate specific transmit beams for each SSB in a SSB burst. The beam configuration may indicate a beam width and a beam sweeping range, etc.

Step 5: NCR 1028 configures and transmits the SSBs with beam sweeping based on the SSBs and beam configuration from gNB 1060.

For the synchronization signals transmitted by the NCR 1028, the NCR should regenerate and transmit the SSBs with different beams in different SSB instances in a SSB burst. The SSB and PBCH information can be the same as detected in the SSBs and PBCHs transmitted by the gNB 1060.

Additionally, or alternatively, the SSBs and PBCHs can include extra NCR specific parameters besides the information detected from the gNB 1060, or with information provided by gNB 1060 via higher layer signaling. For the SSB burst and beam configuration, the NCR 1028 may obtain configurations from gNB 1060 to decide the number of SSBs in a burst and the beams associated with the SSB transmissions. In one case, the SSBs and PBCHs for NCR 1028 can apply the same parameter values as detected in SSBs and PBCHs from the gNB 1060. In another case, the SSBs and PBCHs for NCR 1028 can include different parameter values than those included in SSBs and PBCHs from the gNB 1060. For example, the pdcchConfig-SIB1 may be changed with differentiate CORESET0 resources for NCR 1028 and gNB 1060.

Once the SSBs are configured for the NCR 1028, the NCR 1028 can then generate the SSBs and PBCHs with the configured MIB/SIB and transmit the SSB bursts with the allocated beams based on the SSB burst set configuration. Also, the gNB 1060 can reconfigure the SSBs for the NCR 1028 with higher layer signaling if necessary. For example, the gNB 1060 may configure a new beam width, and/or the number of SSBs and beams in a SSB burst to change the beam sweeping range. The gNB 1060 may change the SSB burst set configuration with a different periodicity and on/off pattern, etc.

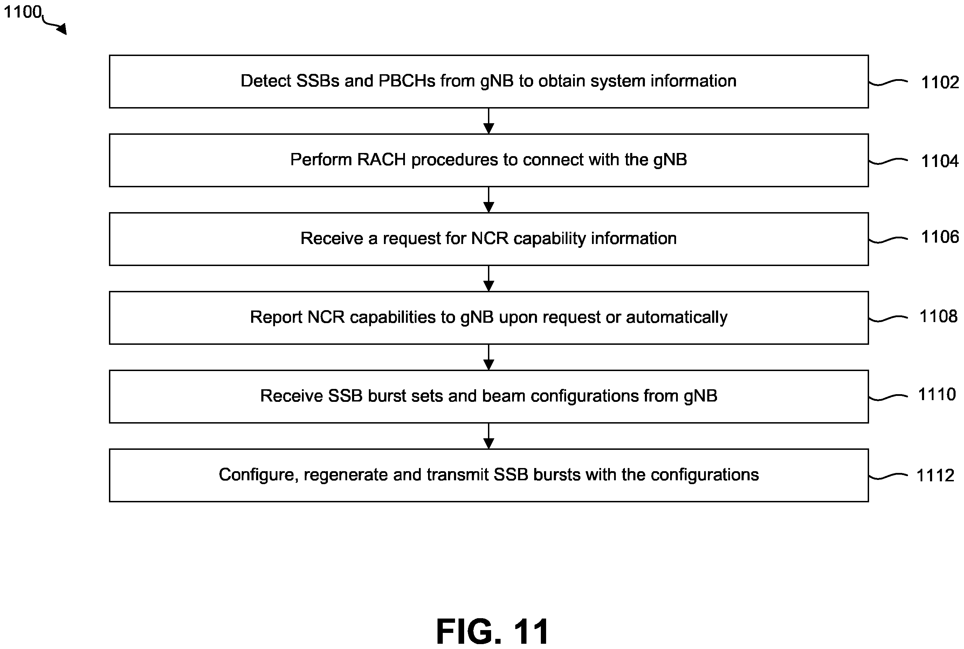

Figure 11 is a flow diagram illustrating one example of a method 1100 for the NCR behavior associated with the sequence diagram of Figure 10. The flow diagram illustrates NCR behavior for synchronization signal detection, regeneration, and transmission.

With Method 1, the NCR synchronization signal configuration is controlled by the gNB. The NCR just follows the configuration from the gNB. The gNB will ensure the configuration of the NCR will not cause collision with the synchronization signals from itself or other NCRs if present.

The NCR may detect 1102 SSBs and PBCHs from the gNB to obtain system information. The NCR may perform 1104 RACH procedures to connect with the gNB. The NCR may receive 1106 a request for NCR capability information. The NCR may report 1108 NCR capabilities to gNB upon request or automatically. The NCR may receive 1110 SSB burst sets and beam configurations from the gNB. The NCR may also configure 1112, regenerate, and transmit the SSB bursts with the configurations.

## Method 2: NCR determines the synchronization signals locally

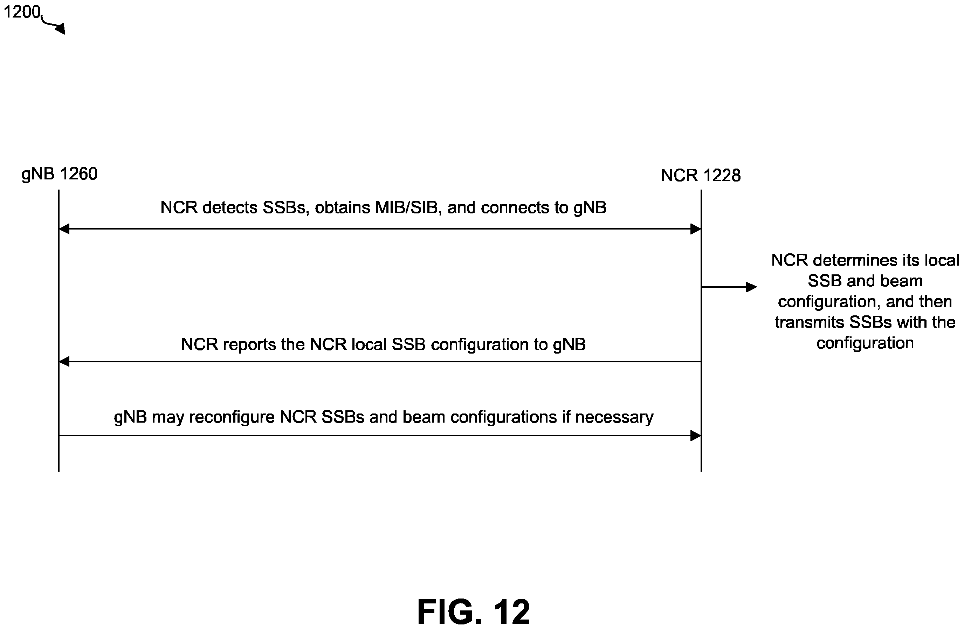

Figure 12 is a sequence diagram 1200 illustrating another example of a procedure of SSB generation and transmission for NCR 1228. In another method, the NCR SSBs and beam setting can be performed locally by NCR 1228 itself, as shown in Figure 12. With this method, the signaling overhead with gNB 1260 is reduced, and the NCR 1228 may have more flexibility to control the local operation.

Thus, the NCR 1228 may decide the number of SSBs in a burst and the beams associated with the SSB transmissions locally and report the configurations to the gNB 1260 automatically or upon request. And the gNB 1260 can reconfigure the SSBs for the NCR 1228 with higher layer signaling if necessary. For example, if the NCR synchronization signals have conflict with some other NCRs or the gNB 1260 itself, or misalignment with some slot configurations etc. This method may include the following steps:

Step 1: NCR 1228 detects SSBs from the gNB 1260, and obtains MIB and SIB from the gNB 1260, and connects to the gNB 1260 through RACH procedure.

Step 2: NCR 1228 determines the local beams and SSB configuration based on its own capabilities, which includes but not limited to the antenna array configuration, maximum number of beams or the number of SSBs the NCR 1228 can transmit within the SSB burst set, etc. The NCR 1228 then generates and transmits SSBs based on the determined local SSBs and beam configuration.

Step 3: NCR 1228 reports the local SSB configuration to the gNB 1260. The NCR 1228 may automatically or upon request report its capabilities such as antenna configuration, beamforming capabilities, etc.

Step 4: gNB 1260 may reconfigure the SSBs for the NCR 1228 with higher layer signaling if necessary.

## Procedures of synchronization signal generation and transmission for Network Controlled Repeaters (NCR).

An NCR node can perform separate beam management for the link between the gNB 1260 and NCR 1228, and the link between the NCR 1228 and UE. For the local synchronization signal generation and transmission:

- The NCR 1228 detects the SSBs and PBCHs from the gNB 1260 to obtain the MIB/SIB information to be broadcasted in its local SSBs and PBCHs, and/or the NCT receives dedicated MIB/SIB information to be broadcasted in its local SSBs and PBCHs by higher layer signaling from gNB 1260.

- And the NCR 1228 determines the local NCR SSB burst set and beam configuration based on some higher layer signaling.

- Then the NCR 1228 regenerates the SSBs and PBCHs with the detected or indicated information, and transmits the synchronization signals following the local NCR SSB burst set and beam configuration.

For the information in the synchronization signals transmitted by the NCR 1228, the NCR 1228 should decode and regenerate the SSBs with different beams in different SSB instances in a SSB burst based on the SSB burst set and beam configuration from the gNB 1260.

- The SSB and PBCH information can be the same as detected in the SSBs and PBCHs transmitted by the gNB 1260.
- Additionally, or alternatively, the SSBs and PBCHs can include extra NCR specific parameters besides the detected information from the gNB 1260. For example, the NCR 1228 may include some information provided by gNBs via higher layer signaling, e.g. with some different parameter values than those included in SSBs and PBCHs from the gNB 1260.

For the SSB burst and beam configuration,

- In one method, the NCR 1228 may report its beamforming capability and/or antenna configuration to gNB 1260, and then obtain NCR synchronization signal configuration from the gNB 1260 to decide the number of SSBs in a burst and the beams associated with the SSB transmissions.
- In another method, the NCR 1228 may decide the NCR synchronization signal configuration, and report the configuration to gNB automatically or upon request.
- In both methods, the gNB 1260 may reconfigure the SSB burst and beam configuration for the NCR 1228 via higher layer signaling.

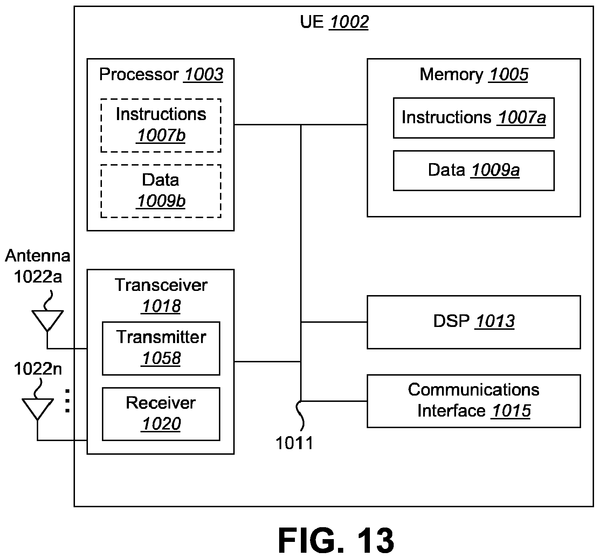

Figure 13 illustrates various components that may be utilized in a UE 1002. The UE 1002 described in connection with Figure 13 may be implemented in accordance with the UE 102 described in connection with Figure 1. The UE 1002 includes a processor 1003 that controls operation of the UE 1002. The processor 1003 may also be referred to as a central processing unit (CPU). Memory 1005, which may include read-only memory (ROM), random access memory (RAM), a combination of the two or any type of device that may store information, provides instructions 1007a and data 1009a to the processor 1003. A portion of the memory 1005 may also include non-volatile random access memory (NVRAM). Instructions 1007b and data 1009b may also reside in the processor 1003. Instructions 1007b and/or data 1009b loaded into the processor 1003 may also include instructions 1007a and/or data 1009a from memory 1005 that were loaded for execution or processing by the processor 1003. The instructions 1007b may be executed by the processor 1003 to implement the methods described herein.

The UE 1002 may also include a housing that contains one or more transmitters 1058 and one or more receivers 1020 to allow transmission and reception of data. The transmitter(s) 1058 and receiver(s) 1020 may be combined into one or more transceivers 1018. One or more antennas 1022a-n are attached to the housing and electrically coupled to the transceiver 1018.

The various components of the UE 1002 are coupled together by a bus system 1011, which may include a power bus, a control signal bus and a status signal bus, in addition to a data bus. However, for the sake of clarity, the various buses are illustrated in Figure 13 as the bus system 1011. The UE 1002 may also include a digital signal processor (DSP) 1013 for use in processing signals. The UE 1002 may also include a communications interface 1015 that provides user access to the functions of the UE 1002. The UE 1002 illustrated in Figure 13 is a functional block diagram rather than a listing of specific components.

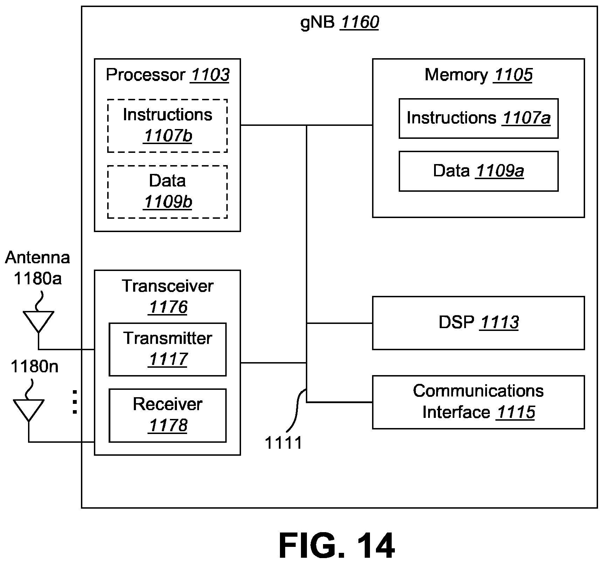

Figure 14 illustrates various components that may be utilized in a gNB 1160. The gNB 1160 described in connection with Figure 14 may be implemented in accordance with the gNB 160 described in connection with Figure 1. The gNB 1160 includes a processor 1103 that controls operation of the gNB 1160. The processor 1103 may also be referred to as a central processing unit (CPU). Memory 1105, which may include read-only memory (ROM), random access memory (RAM), a combination of the two or any type of device that may store information, provides instructions 1107a and data 1109a to the processor 1103. A portion of the memory 1105 may also include non-volatile random access memory (NVRAM). Instructions 1107b and data 1109b may also reside in the processor 1103. Instructions 1107b and/or data 1109b loaded into the processor 1103 may also include instructions 1107a and/or data 1109a from memory 1105 that were loaded for execution or processing by the processor 1103. The instructions 1107b may be executed by the processor 1103 to implement the methods described herein.

The gNB 1160 may also include a housing that contains one or more transmitters 1117 and one or more receivers 1178 to allow transmission and reception of data. The transmitter(s) 1117 and receiver(s) 1178 may be combined into one or more transceivers 1176. One or more antennas 1180a-n are attached to the housing and electrically coupled to the transceiver 1176.

The various components of the gNB 1160 are coupled together by a bus system 1111, which may include a power bus, a control signal bus and a status signal bus, in addition to a data bus. However, for the sake of clarity, the various buses are illustrated in Figure 14 as the bus system 1111. The gNB 1160 may also include a digital signal processor (DSP) 1113 for use in processing signals. The gNB 1160 may also include a communications interface 1115 that provides user access to the functions of the gNB 1160. The gNB 1160 illustrated in Figure 14 is a functional block diagram rather than a listing of specific components.

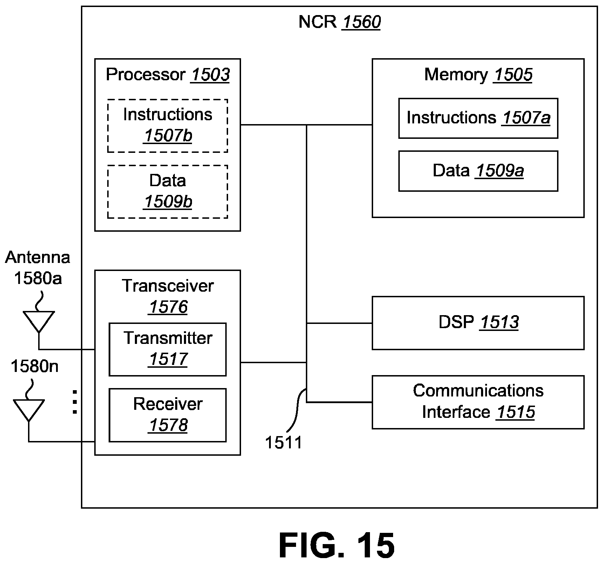

Figure 15 illustrates various components that may be utilized in a NCR 1560. The NCR 1560 described in connection with Figure 15 may be implemented in accordance with the NCR described in connection with Figures 5-12. The NCR 1560 includes a processor 1503 that controls operation of the NCR 1560. The processor 1503 may also be referred to as a central processing unit (CPU). Memory 1505, which may include read-only memory (ROM), random access memory (RAM), a combination of the two or any type of device that may store information, provides instructions 1507a and data 1509a to the processor 1503. A portion of the memory 1505 may also include non-volatile random access memory (NVRAM). Instructions 1507b and data 1509b may also reside in the processor 1503. Instructions 1507b and/or data 1509b loaded into the processor 1503 may also include instructions 1507a and/or data 1509a from memory 1505 that were loaded for execution or processing by the processor 1503. The instructions 1507b may be executed by the processor 1503 to implement the methods described herein.

The NCR 1560 may also include a housing that contains one or more transmitters 1517 and one or more receivers 1578 to allow transmission and reception of data. The transmitter(s) 1517 and receiver(s) 1578 may be combined into one or more transceivers 1576. One or more antennas 1580a-n are attached to the housing and electrically coupled to the transceiver 1576.

The various components of the NCR 1560 are coupled together by a bus system 1511, which may include a power bus, a control signal bus and a status signal bus, in addition to a data bus. However, for the sake of clarity, the various buses are illustrated in Figure 15 as the bus system 1511. The NCR 1560 may also include a digital signal processor (DSP) 1513 for use in processing signals. The NCR 1560 may also include a communications interface 1515 that provides user access to the functions of the NCR 1560. The NCR 1560 illustrated in Figure 15 is a functional block diagram rather than a listing of specific components.

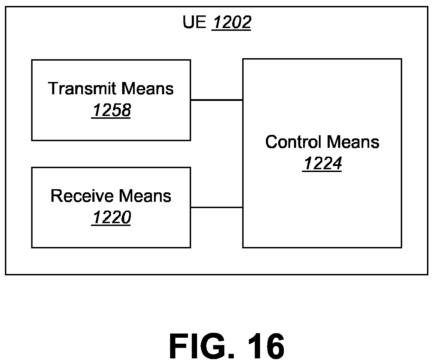

Figure 16 is a block diagram illustrating one implementation of a UE 1202 in which one or more of the systems and/or methods described herein may be implemented. The UE 1202 includes transmit means 1258, receive means 1220 and control means 1224. The transmit means 1258, receive means 1220 and control means 1224 may be configured to perform one or more of the functions described in connection with Figure 1 above. Figure 13 above illustrates one example of a concrete apparatus structure of Figure 16. Other various structures may be implemented to realize one or more of the functions of Figure 1. For example, a DSP may be realized by software.

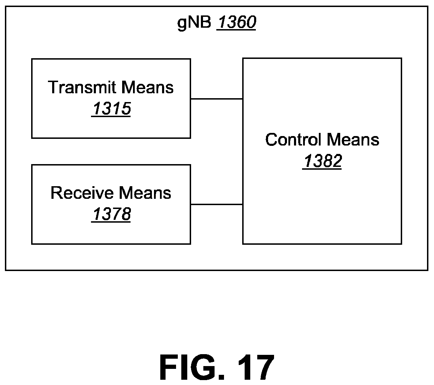

Figure 17 is a block diagram illustrating one implementation of a gNB 1360 in which one or more of the systems and/or methods described herein may be implemented. The gNB 1360 includes transmit means 1315, receive means 1378 and control means 1382. The transmit means 1315, receive means 1378 and control means 1382 may be configured to perform one or more of the functions described in connection with Figure 1 above. Figure 14 above illustrates one example of a concrete apparatus structure of Figure 17. Other various structures may be implemented to realize one or more of the functions of Figure 1. For example, a DSP may be realized by software.

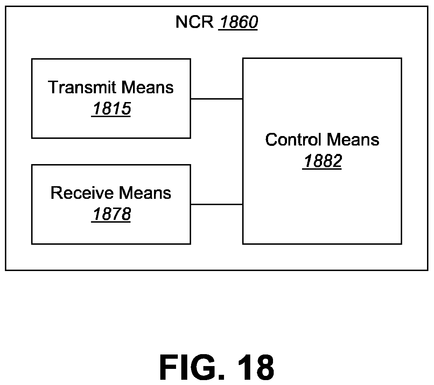

Figure 18 is a block diagram illustrating one implementation of an NCR 1860 in which one or more of the systems and/or methods described herein may be implemented. The NCR 1860 includes transmit means 1815, receive means 1878 and control means 1882. The transmit means 1815, receive means 1878 and control means 1882 may be configured to perform one or more of the functions described in connection with Figures 5-12 above. Figure 15 above illustrates one example of a concrete apparatus structure of Figure 18. Other various structures may be implemented to realize one or more of the functions of Figure 1. For example, a DSP may be realized by software.

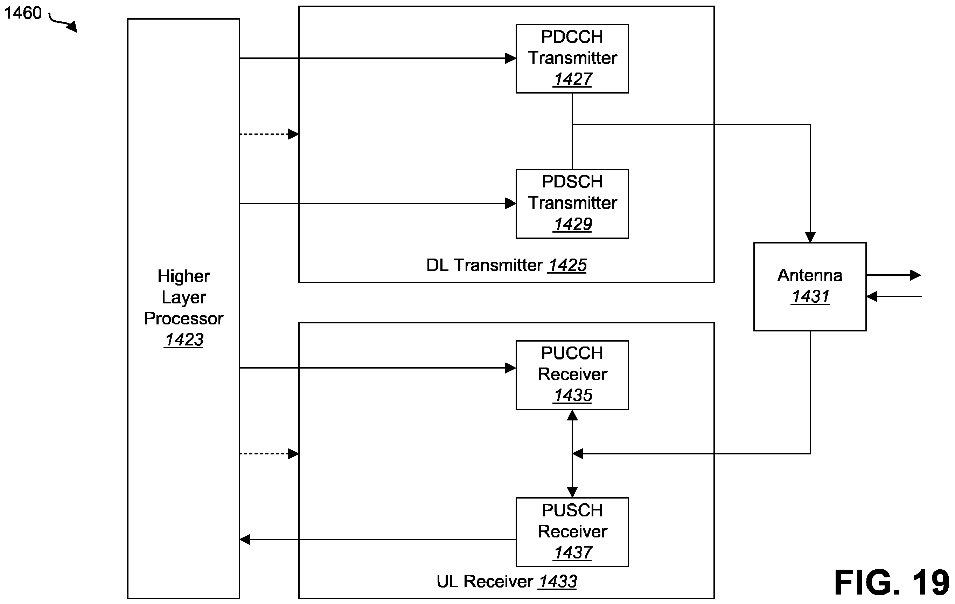

Figure 19 is a block diagram illustrating one implementation of a gNB 1460. The gNB 1460 may be an example of the gNB 160 described in connection with Figure 1. The gNB 1460 may include a higher layer processor 1423, a DL transmitter 1425, a UL receiver 1433, and one or more antenna 1431. The DL transmitter 1425 may include a PDCCH transmitter 1427 and a PDSCH transmitter 1429. The UL receiver 1433 may include a PUCCH receiver 1435 and a PUSCH receiver 1437.

The higher layer processor 1423 may manage physical layer's behaviors (the DL transmitter's and the UL receiver's behaviors) and provide higher layer parameters to the physical layer. The higher layer processor 1423 may obtain transport blocks from the physical layer. The higher layer processor 1423 may send/acquire higher layer messages such as an RRC message and MAC message to/from a UE's higher layer. The higher layer processor 1423 may provide the PDSCH transmitter transport blocks and provide the PDCCH transmitter transmission parameters related to the transport blocks.

The DL transmitter 1425 may multiplex downlink physical channels and downlink physical signals (including reservation signal) and transmit them via transmission antennas 1431. The UL receiver 1433 may receive multiplexed uplink physical channels and uplink physical signals via receiving antennas 1431 and de-multiplex them. The PUCCH receiver 1435 may provide the higher layer processor 1423 UCI. The PUSCH receiver 1437 may provide the higher layer processor 1423 received transport blocks.

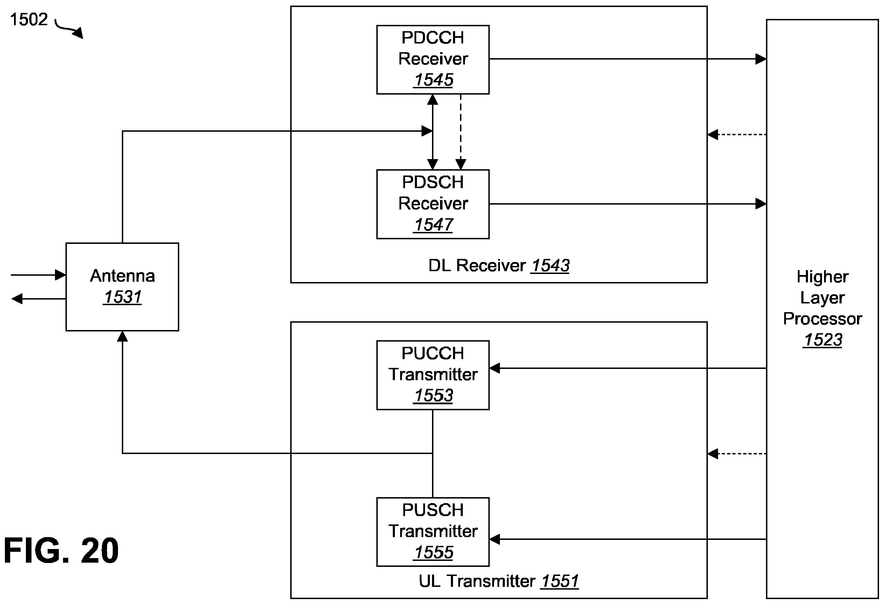

Figure 20 is a block diagram illustrating one implementation of a UE 1502. The UE 1502 may be an example of the UE 102 described in connection with Figure 1. The UE 1502 may include a higher layer processor 1523, a UL transmitter 1551, a DL receiver 1543, and one or more antenna 1531. The UL transmitter 1551 may include a PUCCH transmitter 1553 and a PUSCH transmitter 1555. The DL receiver 1543 may include a PDCCH receiver 1545 and a PDSCH receiver 1547.

The higher layer processor 1523 may manage physical layer's behaviors (the UL transmitter's and the DL receiver's behaviors) and provide higher layer parameters to the physical layer. The higher layer processor 1523 may obtain transport blocks from the physical layer. The higher layer processor 1523 may send/acquire higher layer messages such as an RRC message and MAC message to/from a UE's higher layer. The higher layer processor 1523 may provide the PUSCH transmitter transport blocks and provide the PUCCH transmitter 1553 UCI.

The DL receiver 1543 may receive multiplexed downlink physical channels and downlink physical signals via receiving antennas 1531 and de-multiplex them. The PDCCH receiver 1545 may provide the higher layer processor 1523 DCI. The PDSCH receiver 1547 may provide the higher layer processor 1523 received transport blocks.

The term "computer-readable medium" refers to any available medium that can be accessed by a computer or a processor. The term "computer-readable medium," as used herein, may denote a computer- and/or processor-readable medium that is non-transitory and tangible. By way of example and not limitation, a computer-readable or processor-readable medium may comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer or processor. Disk and disc, as used herein, includes compact disc (CD), laser disc, optical disc, digital versatile disc (DVD), floppy disk and Blu-ray® disc where disks usually reproduce data magnetically, while discs reproduce data optically with lasers.

It should be noted that one or more of the methods described herein may be implemented in and/or performed using hardware. For example, one or more of the methods described herein may be implemented in and/or realized using a chipset, an application-specific integrated circuit (ASIC), a large-scale integrated circuit (LSI) or integrated circuit, etc.

Each of the methods disclosed herein comprises one or more steps or actions for achieving the described method. The method steps and/or actions may be interchanged with one another and/or combined into a single step without departing from the scope of the claims. In other words, unless a specific order of steps or actions is required for proper operation of the method that is being described, the order and/or use of specific steps and/or actions may be modified without departing from the scope of the claims.

It is to be understood that the claims are not limited to the precise configuration and components illustrated above. Various modifications, changes and variations may be made in the arrangement, operation and details of the systems, methods and apparatus described herein without departing from the scope of the claims.

A program running on the gNB 160 or the UE 102 according to the described systems and methods is a program (a program for causing a computer to operate) that controls a CPU and the like in such a manner as to realize the function according to the described systems and methods. Then, the information that is handled in these apparatuses is temporarily stored in a RAM while being processed. Thereafter, the information is stored in various ROMs or HDDs, and whenever necessary, is read by the CPU to be modified or written. As a recording medium on which the program is stored, among a semiconductor (for example, a ROM, a nonvolatile memory card, and the like), an optical storage medium (for example, a DVD, a MO, a MD, a CD, a BD and the like), a magnetic storage medium (for example, a magnetic tape, a flexible disk and the like) and the like, any one may be possible. Furthermore, in some cases, the function according to the described systems and methods described herein is realized by running the loaded program, and in addition, the function according to the described systems and methods is realized in conjunction with an operating system or other application programs, based on an instruction from the program.

Furthermore, in a case where the programs are available on the market, the program stored on a portable recording medium can be distributed or the program can be transmitted to a server computer that connects through a network such as the Internet. In this case, a storage device in the server computer also is included. Furthermore, some or all of the gNB 160 and the UE 102 according to the systems and methods described herein may be realized as an LSI that is a typical integrated circuit. Each functional block of the gNB 160 and the UE 102 may be individually built into a chip, and some or all functional blocks may be integrated into a chip. Furthermore, a technique of the integrated circuit is not limited to the LSI, and an integrated circuit for the functional block may be realized with a dedicated circuit or a general-purpose processor. Furthermore, if with advances in a semiconductor technology, a technology of an integrated circuit that substitutes for the LSI appears, it is also possible to use an integrated circuit to which the technology applies.

Moreover, each functional block or various features of the base station device and the terminal device used in each of the aforementioned embodiments may be implemented or executed by a circuitry, which is typically an integrated circuit or a plurality of integrated circuits. The circuitry designed to execute the functions described in the present specification may comprise a general-purpose processor, a digital signal processor (DSP), an application specific or general application integrated circuit (ASIC), a field programmable gate array (FPGA), or other programmable logic devices, discrete gates or transistor logic, or a discrete hardware component, or a combination thereof. The general-purpose processor may be a microprocessor, or alternatively, the processor may be a conventional processor, a controller, a microcontroller, or a state machine. The general-purpose processor or each circuit described herein may be configured by a digital circuit or may be configured by an analogue circuit. Further, when a technology of making into an integrated circuit superseding integrated circuits at the present time appears due to advancement of a semiconductor technology, the integrated circuit by this technology is also able to be used.

As used herein, the term "and/or" should be interpreted to mean one or more items. For example, the phrase "A, B and/or C" should be interpreted to mean any of: only A, only B, only C, A and B (but not C), B and C (but not A), A and C (but not B), or all of A, B, and C. As used herein, the phrase "at least one of' should be interpreted to mean one or more items. For example, the phrase "at least one of A, B and C" or the phrase "at least one of A, B or C" should be interpreted to mean any of: only A, only B, only C, A and B (but not C), B and C (but not A), A and C (but not B), or all of A, B, and C. As used herein, the phrase "one or more of' should be interpreted to mean one or more items. For example, the phrase "one or more of A, B and C" or the phrase "one or more of A, B or C" should be interpreted to mean any of: only A, only B, only C, A and B (but not C), B and C (but not A), A and C (but not B), or all of A, B, and C.

**Claims**

1. A network controlled repeater (NCR) comprising:

   receiving circuitry configured to obtain the local NCR SSB burst set and beam configuration, and the master information block (MIB) and/or system information block (SIB) information to be broadcast in a local synchronization signal block (SSB) and physical broadcast channel (PBCH); and
   transmitting circuitry configured to:

   determine a local NCR SSB burst set and beam configuration based on higher layer signaling;
   regenerate the SSB and PBCH with the obtained information; and
   transmit the SSB following the local NCR SSB burst set and beam configuration.

2. The NCR of claim 1, wherein the receiving circuitry is further configured to obtain the MIB and/or SIB information by detecting the SSB and PBCH from a base station and/or to obtain the MIB and/or SIB information by receiving dedicated MIB and/or SIB information from higher layer signaling from a base station.

3. The NCR of claim 1, wherein the transmitting circuitry is further configured to report NCR beamforming capability and/or an NCR antenna configuration to a base station.

4. The NCR of claim 1, wherein the receiving circuitry is further configured to obtain an NCR synchronization signal configuration from the base station to determine a number of SSBs in a burst and beams associated with SSB transmissions.

5. The NCR of claim 1, wherein the receiving circuitry is further configured to receive a reconfiguration for the SSB burst and beam configuration via higher layer signaling from a base station.

6. The NCR of claim 1, wherein the NCR determines an NCR synchronization signal configuration by itself based on the NCR beamforming capability and/or an NCR antenna configuration; and reports the NCR synchronization signal configuration to a base station.

7. A gNodeB (gNB) comprising:

   transmitting circuitry configured to send a NCR SSB burst set and beam configuration to a NCR, and to send the master information block (MIB) or system information block (SIB) information to be broadcast in the NCR synchronization signal block (SSB) and physical broadcast channel (PBCH); and
   receiving circuitry configured to:
   receive the NCR beamforming capability and/or an NCR antenna configuration from the NCR.

8. The gNB of claim 7, wherein the transmitting circuitry is further configured to send dedicated MIB and/or SIB information with higher layer signaling to the NCR to determine the MIB and/or SIB information to be broadcast in the NCR SSB and PBCH.

9. The gNB of claim 7, wherein the receiving circuitry is further configured to receive a report on the NCR beamforming capability and/or an NCR antenna configuration from the NCR

10. The gNB of claim 7, wherein the transmitting circuitry is further configured to send an NCR synchronization signal configuration to the NCR to determine a number of SSBs in a burst and beams associated with SSB transmissions by the NCR.

11. The gNB of claim 7, wherein the transmitting circuitry is further configured to send the NCR a reconfiguration for the NCR SSB burst and beam configuration via higher layer signaling.

12. The gNB of claim 7, wherein the receiving circuitry is further configured to receive a report of the NCR synchronization signal configuration from the NCR.

13. A communication method of a network controlled repeater (NCR), comprising:

obtaining a local NCR SSB burst set and beam configuration, and obtaining the master information block (MIB) and/or system information block (SIB) information to be broadcast in a local synchronization signal block (SSB) and physical broadcast channel (PBCH);

determining a local NCR SSB burst set and beam configuration based on higher layer signaling;

regenerating the SSB and PBCH with the obtained information; and

transmitting the SSB following the local NCR SSB burst set and beam configuration.

**FIG. 1**

Supported Transmission Numerologies 201

| $\mu$ | $\Delta f = 2^{\mu} \cdot 15[\text{kHz}]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |
| 5 | 480 | Normal |

Number of OFDM Symbols Per Slot 203

| $\mu$ | Slot configuration | | | | | |
|---|---|---|---|---|---|---|
| | 0 | | | 1 | | |
| | $N_{symb}^{slot}$ | $N_{slot}^{frame,\mu}$ | $N_{slot}^{subframe,\mu}$ | $N_{symb}^{slot}$ | $N_{slot}^{frame,\mu}$ | $N_{slot}^{subframe,\mu}$ |
| 0 | 14 | 10 | 1 | 7 | 20 | 2 |
| 1 | 14 | 20 | 2 | 7 | 40 | 4 |
| 2 | 14 | 40 | 4 | 7 | 80 | 8 |
| 3 | 14 | 80 | 8 | - | - | - |
| 4 | 14 | 160 | 16 | - | - | - |
| 5 | 14 | 320 | 32 | - | - | - |

FIG. 2

EP 4 266 596 A1

Resource Grid 301

$N_{RB}^{\mu} N_{SC}^{RB}$ subcarriers

$N^{RB}{}_{SC}$ subcarriers

$l = 0$

$l = 14 \cdot 2^{\mu} - 1$

$N_{symbol}^{subframe,\mu}$ OFDM Symbols 387

One subframe 369

$k = 0$

Resource Element $(k,l)$ 389

Resource Block 391

$k = N_{RB}^{\mu} N_{SC}^{RB} - 1$

**FIG. 3**

Physical Resource Block
(PRB) 491
(= 12 subcarriers)

E.g., DL control channel

PRB set(s) for DL control
channel monitoring

Frequency

E.g., DL shared channel

FIG. 4

EP 4 266 596 A1

500 ↘

gNB *560*

Network Controlled
Repeater (NCR) *528*

UE *502*

# FIG. 5

**FIG. 6**

**FIG. 7**

**FIG. 8**

EP 4 266 596 A1

Beam signaled received at Smart Repeater from gNB

The Smart Repeater receives system info based on the best beam

**FIG. 9**

EP 4 266 596 A1

EP 4 266 596 A1

1000

gNB 1060                                                                 NCR 1028

NCR detects SSBs, obtains MIB/SIB, and connects to gNB

gNB requests NCR capability information, e.g. antenna
configuration, beamforming capabilities, etc.

NCR reports the NCR capability information to gNB

gNB sends SSB burst sets and beam configurations to the NCR

NCR configures,
regenerates and transmits
SSB bursts with the
configurations

# FIG. 10

1100

Detect SSBs and PBCHs from gNB to obtain system information — 1102

Perform RACH procedures to connect with the gNB — 1104

Receive a request for NCR capability information — 1106

Report NCR capabilities to gNB upon request or automatically — 1108

Receive SSB burst sets and beam configurations from gNB — 1110

Configure, regenerate and transmit SSB bursts with the configurations — 1112

**FIG. 11**

1200

gNB 1260                                                                    NCR 1228

NCR detects SSBs, obtains MIB/SIB, and connects to gNB

NCR determines its local
SSB and beam
configuration, and then
transmits SSBs with the
configuration

NCR reports the NCR local SSB configuration to gNB

gNB may reconfigure NCR SSBs and beam configurations if necessary

**FIG. 12**

EP 4 266 596 A1

EP 4 266 596 A1

UE *1002*

Processor *1003*

Instructions *1007b*

Data *1009b*

Memory *1005*

Instructions *1007a*

Data *1009a*

Antenna 1022a

1022n

Transceiver *1018*

Transmitter *1058*

Receiver *1020*

DSP *1013*

Communications Interface *1015*

1011

## FIG. 13

gNB _1160_

Processor _1103_

Instructions
_1107b_

Data
_1109b_

Memory _1105_

Instructions _1107a_

Data _1109a_

Antenna
1180a

1180n

Transceiver
_1176_

Transmitter
_1117_

Receiver
_1178_

1111

DSP _1113_

Communications
Interface _1115_

**FIG. 14**

32

EP 4 266 596 A1

**FIG. 15**

UE 1202

Transmit Means 1258

Control Means 1224

Receive Means 1220

FIG. 16

**FIG. 17**

EP 4 266 596 A1

NCR *1860*

Transmit Means
*1815*

Receive Means
*1878*

Control Means
*1882*

**FIG. 18**

1460

Higher Layer Processor *1423*

DL Transmitter *1425*
- PDCCH Transmitter *1427*
- PDSCH Transmitter *1429*

UL Receiver *1433*
- PUCCH Receiver *1435*
- PUSCH Receiver *1437*

Antenna *1431*

**FIG. 19**

EP 4 266 596 A1

1502 ⌐

**PDCCH Receiver** *1545*

**PDSCH Receiver** *1547*

DL Receiver *1543*

**Antenna** *1531*

**Higher Layer Processor** *1523*

**PUCCH Transmitter** *1553*

**PUSCH Transmitter** *1555*

UL Transmitter *1551*

# FIG. 20

Europäisches
Patentamt

European
Patent Office

Office européen
des brevets

# EUROPEAN SEARCH REPORT

Application Number

**EP 23 15 0277**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/037486 A1 (LI JUNYI [US] ET AL) 4 February 2021 (2021-02-04) * paragraphs [0122], [0124] * * figure 5 * | 1-13 | INV. H04B7/155 |
| A | US 2022/077922 A1 (ABEDINI NAVID [US] ET AL) 10 March 2022 (2022-03-10) * paragraph [0158] * | 1-13 | |
| A | US 2022/046637 A1 (ABEDINI NAVID [US] ET AL) 10 February 2022 (2022-02-10) * paragraph [0164] * * figure 7 * | 1-13 | |

TECHNICAL FIELDS
SEARCHED      (IPC)

H04B

The present search report has been drawn up for all claims

| Place of search | Date of completion of the search | Examiner |
|---|---|---|
| Munich | 8 September 2023 | Franz, Stefan |

EPO FORM 1503 03.82 (P04C01)

## ANNEX TO THE EUROPEAN SEARCH REPORT
## ON EUROPEAN PATENT APPLICATION NO.

EP 23 15 0277

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2023

| Patent document cited in search report | | Publication date | Patent family member(s) | | Publication date |
|---|---|---|---|---|---|
| US 2021037486 | A1 | 04-02-2021 | CN | 114208250 A | 18-03-2022 |
| | | | EP | 4005109 A1 | 01-06-2022 |
| | | | US | 2021037486 A1 | 04-02-2021 |
| | | | WO | 2021021432 A1 | 04-02-2021 |
| US 2022077922 | A1 | 10-03-2022 | CN | 116158042 A | 23-05-2023 |
| | | | EP | 4211848 A1 | 19-07-2023 |
| | | | US | 2022077922 A1 | 10-03-2022 |
| | | | WO | 2022056507 A1 | 17-03-2022 |
| US 2022046637 | A1 | 10-02-2022 | US | 2022046637 A1 | 10-02-2022 |
| | | | WO | 2022032252 A1 | 10-02-2022 |

EPO FORM P0459

For more details about this annex : see Official Journal of the European Patent Office, No. 12/82